# EUROPÄISCHE PATENTSCHRIFT

(11) **EP 0 591 293 B1**
(45) Veröffentlichungstag und Bekanntmachung des Hinweises auf die Patenterteilung: **06.03.1996**
(21) Anmeldenummer: 92912685.2
(22) Anmeldetag: 22.06.1992
(51) Int. Cl.: C25B 9/00, C25B 11/02, H01M 8/08, H01M 4/86

(54) **ELEKTROLYSEZELLE SOWIE KAPILLARSPALTELEKTRODE FÜR GASENTWICKELNDE ODER GASVERBRAUCHENDE ELEKTROLYTISCHE REAKTIONEN UND ELEKTROLYSEVERFAHREN HIERFÜR**
ELECTROLYTIC CELL AND CAPILLARY SLIT ELECTRODE FOR GAS-DEVELOPING OR GAS-CONSUMING ELECTROLYTIC REACTIONS AND ELECTROLYSIS PROCESS THEREFOR
PROCEDE D'ELECTROLYSE, CELLULE D'ELECTROLYSE ET ELECTRODE CAPILLAIRE A FENTE POUR REACTIONS ELECTROLYTIQUES DEGAGEANT OU CONSOMMANT DES GAZ

(30) Priorität: 22.06.1991 DE 4120679
(43) Veröffentlichungstag der Anmeldung: 13.04.1994
(73) Patentinhaber: Maschinen- und Anlagenbau Grimma GmbH (MAG), D-04662 Grimma (DE)
(72) Erfinder: WENSKE, Hanno, D-7240 Grimma (DE); MATSCHINER, Hermann, D-4020 Halle/Saale (DE); SIEGEL, Hans, D-7114 Zwickau (DE)
(74) Vertreter: Grünecker, Kinkeldey, Stockmair & Schwanhäusser Anwaltssozietät
(86) Internationale Anmeldenummer: EP9201402
(87) Internationale Veröffentlichungsnummer: WO9300459

(56) Entgegenhaltungen:
- EP-A- 0 360 536
- WO-A-88/03966
- WO-A-91/00379
- WO-A-92/22681
- US-A- 4 260 469

## Beschreibung

Die vorliegende Erfindung betrifft eine Elektrolysezelle für gasentwickelnde oder gasverbrauchende elektrolytische Reaktionen und Prozesse, insbesondere für die Chloralkali- oder Wasserelektrolyse oder als Brennstoffzelle, mit einem Elektrolyten und mit zumindest einem, durch wenigstens einen Separator getrennten Elektrodenpaar mit zumindest einer Kapillarspaltelektrode. Die Erfindung betrifft ferner eine Kapillarspaltelektrode sowie ein Elektrolyseverfahren für gasentwickelnde oder gasverbrauchende elektrolytische Prozesse.

Für die Effizienz der Elektrolyse, z.B. bei der Chloralkali - oder Wasserelektrolyse zur Gewinnung von Natronlauge, Chlor, Wasserstoff oder Wasserstoffperoxid, sind die verwendeten Elektroden von herausragender Bedeutung. Diese sollen einen möglichst niedrigen Widerstand besitzen und daher eine rasche Ab- bzw. Zufuhr des Reaktionsgases aus dem Reaktionsbereich zwischen Katode und Anode ermöglichen.

Die bisher üblichen konstruktiven Elektrodenausführungen in Chloralkali- und Wasserelektrolyseuren mit hochaktiven Elektrodenwerkstoffen sind durch Gasblasenbeladungen des Elektrolyten und Gasblasenbedeckungen der Elektroden im aktiven Bereich noch erheblich ineffizient.

Der Einsatz von Gasdiffusionselektroden ist für elektrischchemische Prozesse bisher zumeist an den zu hohen Betriebskosten und dem mangelhaften Stoffaustausch der gasangereicherten, porösen Elektroden, der bei flüssigkeitsgefüllten Zellen auftritt, gescheitert. Die verhältnismäßig niedrige Festigkeit der Elektrode/ Diaphragma/ Elektrode-Kombination sowie die zum Teil inhomogene Stromverteilung schränken bisher technische Realisierungen auf kleine Einheiten ein. Die Herstellung und der betriebliche Einsatz von sehr dünnen und stabilen Elektroden erfordert kostenaufwendige Technologien.

Aus der FR-PS 2 308 701 ist eine Elektrolysevorrichtung mit refraktionierten Elektroden bekannt, bei denen die porösen Elektroden mit porösen Metalloxiden teilbeschichtet sind und durch Ausbildung eines Druckgefälles Sorge getragen ist, daß Gasblasen nur aus der Rückseite der Elektrode entweichen können. Hierbei sind sowohl die Poren der Elektrodengrundkörper als auch der Metalloxidbeschichtung mit Elektrolyt gefüllt. Derartige Elektroden sind kostspielig und das Entfernen von Restgasen aus den Poren nach Abschaltung der Elektrolysezelle ist kompliziert.

In neuerer Zeit ist zur Chlor- und Natronlaugeproduktion eine Zellengestaltung als Fallfilmapparat bekannt geworden, bei dem eine sehr dünne, sauerstoffverzehrende, poröse Katode aus Ag/PTFE verwendet wird (Chem.-Ing.-Tech. 60 (1988) Nr. 7, S. 563). Dabei wird einerseits Sauerstoff der porösen Elektrode zugeführt, während andererseits von oben Dünnlauge zwischen dieser Elektrode und der Membran hindurchläuft und als angereicherte Natronlauge bodenseitig die Zelle verläßt. Die Anode aus aktiv beschichtetem Titanstreckmetall von herkömmlichem Aufbau ist, wie auch die Katode mit einem z.B. ca. 0,6 mm breiten Spalt, zur Membran angeordnet und wird mit Sole von oben her überspült. Das entstehende Chlor tritt rückwärtig aus der Anode heraus und wird durch einen angrenzenden, flüssigkeitsfreien Raum abgeführt.

Aus der WO 91/00379 ist überdies eine Elektrolysezelle für gasentwickelnde elektrolytische Prozesse bekannt, bei der die Probleme der Gasabfuhr aus dem aktiven Bereich sowie hoher elektrischer Belastung unter Verwendung zumindest einer Kapillarspaltelektrode dadurch gelöst werden sollen, daß durch eine geeignete Bemessung der Kapillarspalte eine Bewegungsrichtung der Gasblasen durch die elektrolytgefüllte Elektrode im wesentlichen senkrecht zu der Membran bzw. in Richtung des elektrischen Feldes zwischen Anode und Katode erfolgt. Auch hierdurch werden allerdings die vorerläuterten Schwierigkeiten nicht in zufriedenstellender Weise überwunden.

Aus der WO 92/22681, die ein Dokument nach Art. 54(3) EPÜ bildet, ist eine Elektrolysezelle mit Kapillarspaltstruktur bekannt, mit einem Randbereich, der dem Gas- und Elektrolyt-transport einen größeren Widerstand entgegensetzt als der mittlere oder innere Kapillarspaltbereich der Elektrode. Die Zuführung von Elektrolyt in die randseitigen Reaktionsbereiche, die den Elektrolyt halten, erfolgt hierbei durch Mitreißen mittels Reaktionsgas von unten nach oben.

Der Erfindung liegt daher die Aufgabe zugrunde, eine Elektrolysezelle der eingangs genannten Art zu verbessern, derart, daß eine wesentliche Verminderung des ohmschen Widerstandes bei gleichzeitiger Verbesserung des Stofftransportes bei unkomplizierter Herstellung und Betrieb mit großen aktiven Flächen und Zellenabmessungen ermöglicht werden.

Der Erfindung liegt ferner die Aufgabe zugrunde, eine Kapillarspaltelektrode für die Bildung von Elektrolysezellen und für elektrolytische Prozesse derart zu verbessern, daß die Kapillarspaltelektrode wesentlich verbesserte Gebrauchseigenschaften, insbesondere einen wesentlich verminderten ohmschen Widerstand bei deutlich verbesserter Stofftransportkapazität aufweist.

Der Erfindung liegt ferner die Aufgabe zugrunde, ein Elektrolyseverfahren für gasentwickelnde oder gasverbrauchende elektrolytische Reaktionen und Prozesse in Elektrolysezellen anzugeben, durch das die Leistungsparameter von Elektrolysezellen mit zumindest einer Kapillarspaltelektrode, insbesondere der ohmsche Widerstand und der Stofftransport verbessert werden können.

Die vorgenannte Aufgabe wird bei einer Elektrolysezelle der eingangs genannten Art erfindungsgemäß dadurch gelöst, daß die Kapillarspaltelektrode zumindest einen hydrophilen, elektrolytisch aktiven Reaktionsbereich und einen hydrophoben, elektrolytisch inaktiven Gastransportbereich zur separaten Führung von Elektrolyt oder Permeat und Reaktionsgas aufweist, und der Elektrolyt oder das Permeat entlang des hydrophilen, elektrolytisch aktiven Reaktionsbereiches zu der Kapillarspaltelektrode hin oder von dieser weg geführt ist.

Vorzugsweise weist hierfür die Elektrolysezelle als separate Führungen für den Elektrolyten oder das Permeat und das Reaktionsgas zumindest einen dünnen hydrophilen, elektrolytisch aktiven Reaktionsbereich benachbart zu dem Separator und einen breiteren hydrophoben, elektrolytisch inaktiven Gastransportbereich auf. Der hydrophile Reaktionsbereich benachbart zu dem Separator bildet einen diesem zugewandten Elektrodenabschnitt, während der Gastransportbereich entfernt von dem Separator einen diesem abgewandten Elektrodenabschnitt bildet.

Eine besonders deutliche Herabsetzung des ohmschen Widerstandes wird nach einer bevorzugten Ausführungsform der Erfindung dadurch erreicht, daß der hydrophile Reaktionsbereich der Kapillarspaltelektrode in spaltfreier Verbindung mit dem Separator angeordnet ist.

Vorzugsweise besteht die Kapillarspaltelektrode aus einer Mehrzahl von beabstandet und im wesentlichen parallel zueinander angeordneten Elektrodenelementen, die unter Bildung von im wesentlichen senkrecht zu dem Separator verlaufenden Kapillarspalten in Kontakt mit dem Separator angeordnet sind, wobei eine Abmessung (Breite) des Reaktionsbereiches in Richtung senkrecht zu dem Separator kleiner, vorzugsweise wesentlich kleiner als eine Breite des sich an den Reaktionsbereich anschließenden Gastransportbereiches der Elektrodenelemente ist.

Es wird bevorzugt, die Elektrodenelemente bzw. die Kapillarspaltelektrode in einer Breite von ca. 1/4 der Breite der Elektrodenelemente bzw. der Dicke der Kapillarspaltelektrode hydrophil auszuführen, während der übrige Teil der Kapillarspaltelektrode hydrophob ausgeführt ist. Hierfür kann der Reaktionsbereich eine hydrophile, kristalline Beschichtung aufweisen, während der Transportbereich eine hydrophobe Beschichtung, z.B. eine Fettbeschichtung oder eine Beschichtung mit einem hydrophoben Kunststoffpolymer aufweist.

In einer weiteren, bevorzugten Ausführungsform der erfindungsgemäßen Elektrolysezelle beträgt eine Dicke der streifenförmigen Elektrodenelemente (Abmessung parallel zum Separator bzw. in Richtung der Weite des Kapillarspaltes) ca. 0,01 bis 0,5 mm, die Weite der Kapillarspalte zwischen den distanzierten Elektrodenelementen ca. 0,05 bis 0,25 mm und eine Dicke der Kapillarspaltelektrode (bzw. Breite der Elektrodenelemente senkrecht zum Separator) zumindest das Zehnfache der Weite der Kapillarspalte. Die Weite der Kapillarspalte ist insbesondere abhängig vom Verfahren, der Betriebstemperatur, dem Betriebsdruck und dem verwendeten Elektrolyten bzw. Permeat. Die vorgenannten Parameter können auch jeweils unabhängig voneinander bei einer Kapillarspaltelektrode verwendet sein.

Vorzugsweise sind die Elektrodenelemente der Kapillarspaltelektrode, die eine Gestaltung aufweisen können, wie sie beispielsweise aus der DD-PS 285 127 oder der DD-PS 285 128 bekannt sind, parallel zum Separator hydrophil und, hieran anschließend, in einem größeren, lateral außenliegenden Bereich hydrophob ausgeführt, insbesondere beschichtet, wobei die Breite des separatornahen Abschnittes hydrophiler Charakteristik ca. 1/4 der Breite der im übrigen hydrophob beschichteten Elektrodenelemente beträgt.

Eine bevorzugte konstruktive Gestaltung der Elektrolysezelle wird dadurch erreicht, daß der Separator ein Zuführungselement zur Elektrolyt- bzw. Permeatzuführung zu der Kapillarspaltelektrode, insbesondere zu dem spaltfrei an dem Separator anliegenden Rekationsbereich derselben ist. Auf diese Weise kann die Wirkung des hydrophoben Gastransportbereiches der Kapillarspaltelektrode, nämlich diesen größeren Bereich der Kapillarspaltelektrode praktisch frei von Elektrolyten bzw. Permeat zu halten und praktisch ausschließlich für die Zufuhr bzw. Abfuhr des Reaktionsgases zu benutzen, unterstützt werden.

In vorteilhafter Weise kann als Separator ein Diaphragma oder eine entsprechende Membran verwendet werden. Teilweise ist, z.B. bei der Wasserelektrolyse, auch ein dielektrischer Netz- oder Gitterkörper zur kurzschlußsicheren Trennung von Anode- und Katode ausreichend.

Eine vorteilhafte Ausführungsform der Elektrolysezelle, die zu einem sehr kompakten Aufbau mit besonders geringer Dicke der gesamten Elektrolysezelle führt, wird dadurch erreicht, daß als Anode und Katode jeweils eine Kapillarspaltelektrode in beiderseits spaltfreier Anlage an dem das Elektrodenpaar trennenden Separator ausgebildet sind, so daß Anode und Katode nur durch den Separator getrennt und zu einem Zellenpaket verbunden sind. Eine derartige Elektrolysezelle ist besonders für die Chloralkali- und Wasserelektrolyse geeignet. Hierbei ist zweckmäßigerweise ein sich über die gesamte Breite des vertikal angeordneten Separators unmittelbar oberhalb der Kapillarspaltelektrode bzw. -elektroden ein Kapillarverteiler für den Elektrolyten bzw. das Permeat angeordnet. Das heißt, eine Elektrolysezelle, die sich für die Chloralkali- und Wasserelektrolyse besonders eignet, wird nach einer Ausführungsform der vorliegenden Erfindung bevorzugt so ausgeführt, daß der Separator und die an diesem vorzugsweise spaltfrei anliegende Kapillarspaltelektrode oder Kapillarspaltelektroden vertikal angeordnet sind und sich entlang des Separators oberhalb der Kapillarspaltelektrode trichterrinnenförmig eine Verteilereinrichtung für eine Zufuhr von Elektrolyt oder Permeat entlang zumindest einer Oberfläche des plattenförmigen Separators erstreckt, so daß der Elektrolyt bzw. das Permeat (insbesondere Wasser) einen Film entlang einer Grenzfläche zwischen dem Separator und dem hydrophilen Reaktionsbereich der Kapillarspaltelektrode bzw. -elektroden bildet.

In einer weiteren, für die rasche Zu- bzw. Abfuhr des Reaktionsgases bevorzugten Ausführungsbeispiel der vorliegenden Erfindung ist ein Gaszuführungs- oder Gasabführungsraum seitlich außenliegend oder axial oberhalb im Anschluß an den hydrophoben Gastransportbereich der Kapillarspaltelektrode vorgesehen.

Ein unkomplizierter Zellenaufbau, z.B. für einen bipolaren SPE-Fallfilmelektrolyseur (solid polymer electrolyt) einer Wasserelektrolyse kann vorzugsweise mit einem Elektrodenpaar erreicht werden, das durchgehend elektrisch leitfähig ist.

Eine vorteilhafte Ausgestaltung der Elektrolysezelle, insbesondere für die Chloralkali- oder Wasserelektrolyse kann auch dadurch erreicht werden, daß der Separator mit an diesem in im wesentlichen spaltfreier Anlage befindlichen Kapillarspaltelektrodenpaar plattenförmig ausgebildet und mit den Kapillarspaltelektroden zu einem Zellenpaket verbunden ist, wobei eine Mehrzahl lateraler, vertikal beabstandet von außen an den Kapillarspaltelektroden anliegenden Stromzuführungen Stütz- und Distanzierungselemente zischen den Kapillarspaltelektroden und einem das Zellenpaket aufnehmenden Gehäuse bilden. Bei einer solchen Ausführung ist es auch nicht erforderlich, den Separator als mechanisch selbständig tragfähiges Bauelement auszubilden, weil die in sich steife und dennoch flexibel anschmiegsame Kapillarspaltelektrode, insbesondere bei Ausführung sowohl der Anode als auch der Katode als Kapillarspaltelektrode zu beiden Seiten des Separators, diesen mechanisch stabilisiert, so daß der Separator sehr dünn und verhältnismäßig mechanisch instabil ausgeführt werden kann. Dies führt zu einer weiteren Reduzierung der Dicke der Elektrolysezelle und gestattet außerdem den Einsatz auch solcher Materialien als Separatormaterial, die zwar elektrolytisch vorteilhaft sind, bisher aber nicht verwendbar waren, daß sie den Einsatz eines aus solchem Material gefertigten Separators als selbständiges, mechanisch stabiles und tragfähiges Bauelement nicht zulassen.

Eine hohe Packungsdichte elektrochemischer Zellen innerhalb eines Gehäuses kann nach einem weiteren Ausführungsbeispiel der vorliegenden Erfindung, insbesondere für einen SPE-Elektrolyseur im vertikalen Aufbau auch dadurch erreicht werden, daß eine Mehrzahl von Zellenpaketen, bestehend jeweils aus einem Kapillarspalt-Elektrodenpaar mit zwischenliegendem Separator in planarer Anordnung, getrennt durch vorzugsweise elektrisch leitfähige Trennwände, vorgesehen sind, wobei einander gegenüberliegende Wandungen des Gehäuses als Stromzuführungselemente ausgebildet sind. In diesem Fall ermöglicht die Erfindung in vorteilhafter Weise einen vertikalen Aufbau eines SPE-Elektrolyseurs im Gegensatz zu dem bisher horizontalen Aufbau, wobei ein Wasserfallfilm (Permeat) vorgesehen wird und auf diese Weise eine wesentlich größere Elektrodenoberfläche realisiert werden kann, wobei der hydrophile Reaktionsbereich der Kapillarspaltelektrode das zu zerlegende Wasser in Form eines Filmes festhält.

Nach noch einem weiteren Ausführungsbeispiel der vorliegenden Erfindung zur Verwendung der Elektrolysezelle als bipolare Brennstoffzelle wird bevorzugt, zwischen Anode und Katode einen Elektrolytraum vorzusehen, dessen Wandungen elektrolytpermeable Separatoren in spaltfreier Verbindung zu der jeweils als Kapillarspaltelektrode ausgeführten Anode oder Katode bilden. Vorzugsweise sind hierbei eine Mehrzahl plattenförmiger Elektrodenpaare abfolgend angeordnet und die Elektrolyträume oberhalb und/oder unterhalb der Elektrodenpaare sind kommunizierend miteinander verbunden. Dabei kann vorzugsweise eine Kapillarspaltelektrode eines ersten Elektrodenpaares zugleich eine Elektrode eines weiteren Elektrodenpaares bilden.

Hierfür können nach einer weiteren, bevorzugten Ausführungsform der Erfindung die im Inneren der Anordnung liegenden Kapillarspaltelektroden auch entlang ihrer gegenüberliegenden Außenseiten mit je einem hydrophilen Reaktionsbereich versehen sein, so daß die betreffenden Kapillarspaltelektroden zwei periphere, hydrophile Reaktionsbereiche, getrennt durch einen mittleren, hydrophoben Gastransportbereich, aufweisen.

Zur Lösung der vorgenannten Aufgabe, unabhängig von einer bestimmten Konfiguration bzw. einer bestimmten Anwendung im Rahmen einer elektrochemischen Elektrolysezelle eine verbesserte Kapillarspaltelektrode für gasentwickelnde oder gasverbrauchende elektrolytische Prozesse und Reaktionen anzugeben, weist die Kapillarspaltelektrode erfindungsgemäß Mittel zur separaten Führung von Elektrolyt und Reaktionsgas auf, wobei eine Benetzung der Kapillarspaltelektrode durch Elektrolyt oder Permeat entlang des hydrophilen, elektrolytisch aktiven Reaktionsbereiches der Kapillarspaltelektrode erfolgt.

Die aus einer Mehrzahl parallel angeordneter, beabstandeter Elektrodenelemente, zwischen denen Kapillarspalte gebildet sind, aufgebaute Kapillarspaltelektrode kann eine Konfiguration besitzen, wie sie z.B. aus der DD-PS 285 127 oder der DD-PS 285 128 bekannt ist und aus einer Vielzahl von Lamellen, Bändern, Folienstreifen oder dgl. bestehen. Eine wesentlich verbesserte Abfuhr bzw. Zufuhr von Reaktionsgas, das seinerseits den elektrolytischen Stofftransport nicht behindert, wird dabei nach einer bevorzugten Ausführungsform dadurch erreicht, daß die Elektrodenelemente zumindest einen schmalen, vorzugsweise zur Anordnung an einem Separator vorgesehenen hydrophilen Reaktionsbereich, in dem der Elektrolyt bzw. der Permeat unter Kapillarwirkung aufgenommen und festgehalten wird, sowie einen sich nach außen hieran anschließenden hydrophoben Gastransportbereich aufweist, der aufgrund einer flüssigkeitsabweisenden, hydrophoben Gestaltung, insbesondere Beschichtung, praktisch frei von Elektrolytoder Permeatflüssigkeit bleibt, so daß der 0hm'sche Widerstand der Kapillarspaltelektrode durch Vermeidung einer Blockierung der wirksamen Elektrodenoberfläche durch Gasblasen verringert wird und zugleich eine rasche Zu- und Abfuhr des Reaktionsgases zu dem Bereich elektolytischer Reaktion gewährleistet ist, ohne daß diese selbst durch den Gastransport gestört wird.

Vorzugsweise weisen die beabstandeten Elektrodenelemente eine Dicke von ca. 0,01 bis 0,05 mm auf und/oder beträgt in Abhängigkeit von der Verwendung der Kapillarspaltelektrode im Rahmen eines elektrochemischen Prozesses, d.h. in Abhängigkeit von elektrochemischem Verfahren, Betriebstemperatur, Betriebsdruck und Elektrolyt, die Weite des Kapillarspaltes zwischen benachbarten Elektrodenelementen ca. 0,05 bis 0,25 mm und/oder besitzt die Kapillarspaltelektrode eine Dicke (entspricht der Breite der Elektrodenelemente), die zumindest dem Zehnfachen der Weite der Kapillarspalte entspricht. Der hydrophile Reaktionsbereich, der streifenförmig an zumindest einer Seite der Elektrodenelemente gebildet ist, weist vorzugsweise eine Breite von ca. 1/4 der Gesamtbreite der Elektrodenelemente (entspricht der Dicke der Kapillarspaltelektrode) auf, während der übrige Teil der Kapillarspaltelektrode als praktisch elektrolytfreier (oder permeatfreier) Gastransportbereich zur Verfügung steht und durch hydrophobe Beschichtung, z.B. durch Fett oder hydrophobe Kunststoffpolymere, von Elektrolyt bzw. Permeat freigehalten wird. Der hydrophile Bereich wird z.B. durch eine entsprechend elektrolytanziehende, kristalline Beschichtung gebildet.

Zur Bildung des Kapillarspaltes zwischen benachbarten Elektrodenelementen sind alternierend planparallele Elektrodenelemente und gewellte Distanzierungs-Elektrodenelemente angeordnet. Nach einer bevorzugten Ausführungsform können die Elektrodenelemente zur Bildung des Kapillarspaltes auch integrale Sicken, Profilierungen oder dgl. aufweisen.

Zur Lösung der vorgenannten Aufgabe, ein verbessertes Elektrolyseverfahren anzugeben, das zu einer Verminderung des ohmschen Widerstandes bei verbessertem Stofftransport sowie günstigeren Leistungsparametern und Betriebsbedingungen für das Elektrolyseverfahren führt, ist erfindungsgemäß ein Elektrolyseverfahren für gasentwickelnde oder gasverbrauchende Prozesse in Elektrolysezellen mit zumindest einem Elektrodenpaar vorgesehen, wobei zumindest eine der Elektroden eine Kapillarspaltelektrode ist, die von der weiteren Elektrode durch zumindest einen Separator getrennt ist, mit einer Elektrolysezelle nach Anspruch 1, wobei der Elektrolyt oder das Permeat und das entstehende oder zu verbrauchende Reaktionsgas zumindest im wesentlichen innerhalb der Kapillarspaltelektrode getrennt geführt werden und der Elektrolyt im wesentlichen den Gastransport und der Gasttransport im wesentlichen die elektrolytische Reaktion unbeeinflußt läßt, und wobei der Elektrolyt oder das Permeat entlang des Separators zu der Kapillarspaltelektrode hin oder von dieser weg geführt wird.

Damit wird der Elektrolyt bzw. das Permeat nur einem am Separator anliegenden, inneren hydrophilen Reaktionsbereich zugeführt und bildet dort einen dünnen Flüssigkeitsfilm, der sich in diesem Reaktionsbereich kapillarisch ausbreitet, während der von dem Separator abgewandte, hydrophobe Bereich der Kapillarspaltelektrode, d.h. die Kapillarspalte in diesem Bereich praktisch frei von Elektrolyt oder Permeat gehalten wird.

Vorzugsweise wird innerhalb der Kapillarspaltelektrode ein innenliegender, dem Separator zugewandter, mit Elektrolyt bzw. Permeat gefüllter Reaktionsbereich sowie ein den größeren Teil der Kapillarspaltelektrode umfassender, im wesentlichen flüssigkeitsfreier Gastransportbereich gebildet und wird das Reaktionsgas im wesentlichen senkrecht zu dem Separator durch den flüssigkeitsfreien Raum der Kapillarspalte der Kapillarspaltelektrode zu deren elektrolytgefülltem Reaktionsbereich hin- oder von dem elektrolytgefüllten Reaktionsbereich durch den Gastransportbereich der Kapillarspaltelektrode weggeführt.

Es wird ferner bevorzugt, daß der Elektrolyt bzw. der Permeat der Kapillarspaltelektrode durch den Separator zugeführt wird.

Nach noch einer weiteren, bevorzugten Ausführungsform der Erfindung wird der Elektrolyt bzw. der Permeat im wesentlichen senkrecht zur Richtung des Gastransportes durch die Kapillarspaltelektrode entlang des Separators bzw. entlang einer Grenzfläche zwischen dem Separator und dem Elektrolyt bzw. Permeat aufnehmenden und hydrophilen Reaktionsbereich der Kapillarspaltelektrode zugeführt.

Weitere, bevorzugte Ausgestaltungen des Erfindungsgegenstandes, insbesondere des erfindungsgemäßen Verfahrens, sind in den übrigen Unteransprüchen dargelegt.

Wesentlich für die vorliegende Erfindung ist somit der Umstand, daß eine Kapillarspaltelektrode vorgesehen ist, bei der der Elektrolyt und das Reaktionsgas, das im elektrolytischen Prozeß entsteht oder verbraucht wird, getrennt geführt werden, so daß der Elektrolyt oder das Permeat nicht den Transport des Reaktionsgases behindert und das Reaktionsgas nicht die elektrolytische Reaktion beeinträchtigt. Dazu wird eine Kapillarspaltelektrode eingesetzt, der der Elektrolyt bzw. der Permeat bevorzugt nur in einem dem benachbarten Separator zugewandten, vorzugsweise an diesem anliegenden hydrophilen Reaktionsbereich zugeführt wird, während der vom Separator abgewandte Bereich der Kapillarspaltelektrode eine hydrophobe Charakteristik besitzt und daher die Kapillarspalte in diesem Bereich frei von Elektrolyt bzw. Permeat bleiben. Die Zufuhr des Elektrolyten zur Kapillarspaltelektrode kann durch den Separator erfolgen, auch unter penetrierendem Hindurchtreten durch diesen, z.B. wenn die Wände eines Elektrolytraumes den Separator bzw. die Separatoren bilden oder bei der SPE-Elektrolyse mit Wasser. Die Zufuhr des Elektrolyten/Permeat (insbesondere Wasser) kann auch in Form eines Fallfilmes entlang der Separatoroberfläche auf der der Kapillarspaltelektrode zugewandten Seite, insbesondere von oben nahe einer Oberseite der Kapillarspaltelektrode, erfolgen. Das Reaktionsgas wird durch Bereiche in der Kapillarspaltelektrode abgeführt bzw. zugeführt, die frei von Elektrolyt oder Permeat sind, zweckmäßigerweise auf der dem Separator abgewandten Seite der Kapillarspaltelektrode.

Eine besonders vorteilhafte Verfahrensweise besteht darin, daß der von oben der Kapillarspaltelektrode mit Hilfe des Separators zugeführte Fallfilm aus Elektrolyt oder Permeat in dieser auf die gesamte, an dem Separator anliegende Seite (hydrophiler Reaktionsbereich) der Kapillarspaltelektrode ausgedehnt und in dieser Form fixiert wird, und daß das Reaktionsgas durch die von Elektrolyt oder Permeat freien, hydrophoben Kapillarspaltbereiche der Kapillarspaltelektrode im wesentlichen senkrecht zum Separator ab- bzw. zugeführt werden, wobei dies auch über einen Gassammel- bzw. Zuführungsraum erfolgen kann, der sich oberhalb des hydrophoben Gastransportbereiches der Kapillarspaltelektrode befindet. Der Separator hat vorzugsweise die Form eines Diaphragmas oder einer Membran, wobei wenigstens eine der beiden Elektroden als Kapillarspaltelektrode, die zumindest im wesentlichen an dem Separator anliegt, ausgebildet ist, wobei die Kapillarspaltelektrode aus einer Vielzahl nebeneinander und parallel zueinander angeordneter Elektrodenelemente, deren Abstand untereinander so bemessen ist, daß er einen Kapillareffekt hervorruft, besteht.

Die Führungsmittel der Kapillarspaltelektrode zur separierten Führung von Elektrolyt oder Permeat und Reaktionsgas bestehen vorzugsweise in der Ausbildung eines schmalen, elektrolytisch aktiven Reaktionsbereiches, der am Separator anliegt und hydrophil ausgebildet ist, während der übrige, vom Separator abgewandte Bereich der Kapillarspaltelektrode eine hydrophobe Charakteristik und vorzugsweise entsprechende Beschichtung aufweist. Optimale Leistungsparameter einer Elektrolysezelle bzw. der Kapillarspaltelektrode werden dann erreicht, wenn die Kapillarspaltelektrode tatsächlich spaltfrei zur Ausbildung eines geschlossenen Elektrolytfilmes am Trennelement anliegt. Die spaltfreie Anlage bewirkt eine sprunghafte Verminderung des elektrischen Widerstandes und eine sprunghafte Verbesserung des Stoffumsatzes und führt zu einer deutlichen Erhöhung des Wirkungsgrades der Kapillarspaltelektrode bzw. Elektrolysezelle und des Elektrolyseverfahrens. Dies wird in diesem Fall durch Vermeidung von Hohl- oder Zwischenräumen zwischen der Kapillarspaltelektrode und dem Separator und damit der Vermeidung von Gasansammlungen und des Koagulierens von Gasblasen zwischen Separator und Kapillarspaltelektrode, die zur Bildung eines Gasfilmes führen könnten, der als elektrischer Isolator die Elektrolyse behindert, erreicht. Überdies hat ein spaltfreies Anliegen zweier Kapillarspaltelektroden von beiden Seiten am Separator eine hohe mechanische Festigkeit zur Folge.

Bei einer zweckmäßigen Ausgestaltung der Elektrolysezelle erstreckt sich über die gesamte Breite des vertikal angeordneten Separators unmittelbar oberhalb der Kapillarspaltelektrode ein Kapillarverteiler für den Elektrolyten. An die vom Separator abgewandte Seite der Kapillarspaltelektrode kann sich ein Gasabfuhr- bzw. Gaszufuhrraum anschließen.

Als vorteilhaft hat sich erwiesen, daß die Elektrodenelemente vorzugsweise 0,01 bis 0,05 mm dick sind und daß die Weite der Kapillarspalte, abhängig vom Elektrolyseverfahren, der Betriebstemperatur, dem Betriebsdruck und der Art des Elektrolyten oder Permeats zwischen 0,05 und 0,25 mm beträgt. Die Breite der Elektrodenelemente, die zugleich die Dicke der Kapillarspaltelektrode bildet, beträgt vorzugsweise zumindest das Zehnfache der Weite der Kapillarspalte.

Eine besonders geringe Dicke der Elektrolysezelle ergibt sich, wenn Anode und Katode nur durch den Separator getrennt und zu einem Zellenpaket verbunden sind. Eine solche Elektrolysezelle ist besonders für die Chloralkali- und Wasserelektrolyse geeignet. Soll hingegen der Elektrolyt durch einen Elektrolytraum zwischen den Elektroden zugeführt werden, ist es zweckmäßig, die Wände des Elektrolytraumes als elektrolytpermeable Separatoren auszuführen, wobei sich der Elektrolyt nur innerhalb des Elektrolytraumes sowie dem Separator und der sich hieran anschließenden hydrophilen Grenzschicht, dem aktiven Reaktionsbereich der Kapillarspaltelektrode befindet. Auch bei dieser Ausführung einer Elektrolysezelle ist es möglich, eine Mehrzahl von Anoden und Katoden mit dazwischenliegenden Elektrolyträumen zu einem Zellenpaket zu verbinden, wobei die Elektrolyträume untereinander ebenfalls strömungsverbunden sind.

Nachfolgend wird die Wirkungsweise der vorliegenden Erfindung nochmals zusammenfassend erläutert.

Bei herkömmlichen Kapillarspaltelektroden sind die (normalerweise horizontalen) Kapillaren zwischen den Elektroden mit Elektrolyt gefüllt. Das heißt, die Kapillarspaltelektrode in herkömmlicher Ausführung bewirkt ein vollständiges Vollsaugen der Kapillarspalte mit Elektrolyt oder Permeat, bedingt durch den Kapillareffekt. Auch bei ungleichmäßiger Zufuhr des Elektrolyten bzw. Permeats, insbesondere bei einer Zufuhr in Form eines Fallfilmes, ermöglicht daher eine Kapillarspaltelektrode eine gleichmäßige Verteilung des Elektrolyten bzw. Permeats über die gesamte Elektrodenfläche und über ihre gesamte Dicke. Während ersteres, d.h. eine große aktive Elektrodenoberfläche getränkt mit Elektrolyt oder Permeat erwünscht ist, behindert letzteres, d.h. die vollständige Füllung der Kapillarspaltelektrode mit Elektrolyt oder Permeat, die Abfuhr bzw. Zufuhr des Reaktionsgases durch die Kapillarspaltelektrode, mit der Folge, daß die Gasblasen die Intensität der elektrolytischen Reaktion im aktiven Bereich der Elektrode erheblich beeinträchtigen. Das bei der Elektrolyse entstehende oder benötigte Gas bildet Blasen, die sich aus den Kapillarspalten nach außen bewegen müssen. Bei einer gaserzeugenden elektrolytischen Reaktion werden die im Reaktionsbereich der Elektroden entstehenden Gasblasen durch die Oberflächenspannung des Elektrolyten bzw. Permeats von der festen Phase in Spaltmitte der Elektrodenelemente mit großer Heftigkeit nach außen gedrängt. Dadurch erfolgt eine hohe Stoffbewegung in der Fest-Flüssig-Phase und damit ein hoher Stoffaustausch durch Verringerung der Nernstschen Schichtdicke.

Um einerseits einen Gas-Isolationseffekt innerhalb der Elektrode mit der Folge erhöhten Strombedarfes bzw. geringerer Stromausbeute sowie eine Beeinträchtigung der elektrolytischen Reaktion durch die Gasblasen zu vermeiden, wird erfindungsgemäß die Kapillarspaltelektrode mit Führungsmitteln versehen, die eine separierte Führung von Elektrolyt oder Permeat und Reaktionsgas innerhalb der Elektrode gewährleisten. Vorzugsweise werden diese Führungsmittel durch Aufteilung der Elektrode in einen hydrophilen Reaktionsbereich und einen hydrophoben Gastransportbereich, vorzugsweise durch eine entsprechende hydrophile bzw. hydrophobe Beschichtung, gebildet, wobei die hydrophile Ausführung der Kapillarspaltelektrode in nur einem schmalen Bereich, der vorzugsweise eng am Separator anliegt, den Kapillareffekt verstärkt und die Ausbreitung des Elektrolyten bzw. Permeats in diesem Bereich gewährleistet. Die hydrophobe Ausführung des übrigen, größeren Bereiches der Kapillarspaltelektrode hebt den Kapillareffekt auf und hält diesen Gastransportbereich daher frei von Elektrolyt bzw. Permeat, so daß hier der Gastransport zwischen dem elektrolytisch aktiven Bereich und der von dem Separatur abgewandten Seite der Kapillarspaltelektrode ungehindert ablaufen kann. Das realisierbare, vorzugsweise spaltfreie Anliegen der Kapillarspaltelektrode am Separator ermöglicht wiederum eine kompaktere Bauweise. Außerdem erübrigt es die Ausführung des Separators als mechanisch selbständiges Bauelement, da die in sich steife und dennoch anschmiegsame Kapillarspaltelektrode, insbesondere bei Verwendung sowohl als Anode als auch als Katode beiderseits des Separators dessen mechanische Stabilisierung übernimmt und zu einer hinreichenden mechanischen Stabilität des Zellenpaketes führt, so daß der Separator selbst dünn und relativ instabil ausgeführt werden kann. Dies bewirkt eine weitere Reduzierung der Dicke einer solchermaßen aufgebauten Elektrolysezelle und gestattet außerdem eine optimale Materialwahl für den Separator unter elektrochemischen Gesichtspunkten, ohne daß auf die mechanische Eigenstabilität Rücksicht genommen werden muß.

Um die sich bildenden Gasblasen innerhalb der Kapillarspaltelektrode besser abführen zu können bzw. besser zu dem hydrophilen Reaktionsbereich der Kapillarspaltelektrode zuführen zu können, sollte dieser ca. 1/4 der Breite der Elektrodenelemente bzw. der Dicke der Kapillarspaltelektrode betragen, wobei der Elektrolyt bzw. das Permeat bevorzugt in diesem hydrophil gestalteten Reaktionsbereich haftet und fixiert werden kann. Vorzugsweise soll der Elektrolyt bzw. das Permeat die Form eines Filmes entlang des Separators besitzen, d.h. in Strom- und elektrischer Feldrichtung senkrecht zu einem Separator eine minimale Erstreckung aufweisen. Im Anschluß an den Elektrolytfilm sollen die Kapillarspalte der Kapillarspaltelektrode elektrolytfrei sein. Auf diese Weise kann das im Elektrolytfilm (oder Permeatfilm) entstehende Reaktionsgas ungehindert aus der Kapillarspaltelektrode abströmen bzw. aus der Umgebung ungehindert zu dem Elektrolytfilm zugeführt werden. Die getrennte Führung von Reaktionsgas und Elektrolyt (bzw. Permeat) wird somit erreicht, derart, daß ein schmaler Bereich der Kapillarspaltelektrode hydrophil ausgebildet bzw. beschichtet ist und den Elektrolyten (oder das Permeat) anzieht sowie die Verteilung des Elektrolyten bzw. Permeats zu einem flächendeckenden Film in Verbindung mit dem Separator bewirkt, während ein breiter Bereich der Kapillarspaltelektrode hydrophob ausgebildet bzw. beschichtet ist, so daß das Einbringen von Elektrolyt (oder Permeat) in diesen Bereich der Kapillarspaltelektrode praktisch unterbleibt und dieser daher frei für den Gastransport ist.

Die Erfindung wird nachfolgend anhand von Ausführungsbeispielen und zugehörigen Zeichnungen näher erläutert. In diesen zeigen:
- Fig. 1: eine Fallfilmelektrolysezelle im Querschnitt, insbesondere für die Chloralkalielektrolyse mit sauerstoffverzehrender Katode nach einem ersten Ausführungsbeispiel der Erfindung in schematischer Darstellung,
- Fig. 2: einen bipolaren SPE-Fallfilmelektrolyseur für die Wasserelektrolyse nach einem weiteren Ausführungsbeispiel der vorliegenden Erfindung in schematischer Darstellung,
- Fig. 3: einen Querschnitt einer bipolaren Brennstoffzelle mit Elektrolyträumen nach einem weiteren Ausführungsbeispiel der vorliegenden Erfindung in schematischer Darstellung, und
- Fig. 4: eine vergrößerte Einzelheit einer Kapillarspaltelektrodenanordnung in schematischer Darstellung für eine Elektrolysezelle nach den Fig. 1 bis 3.

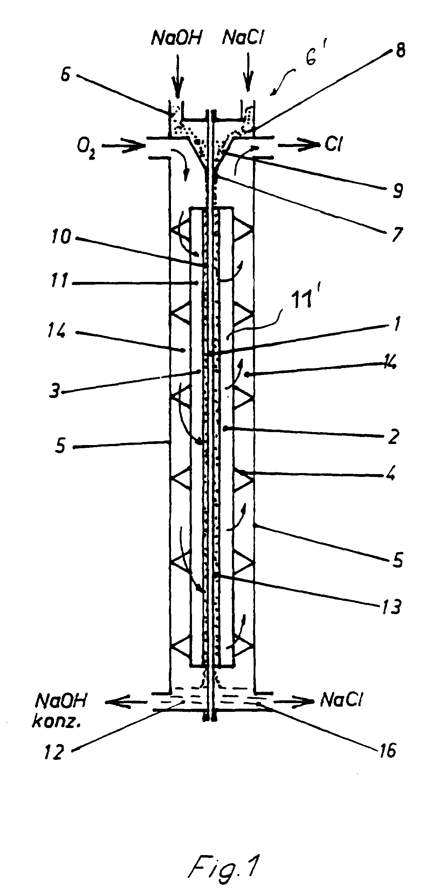

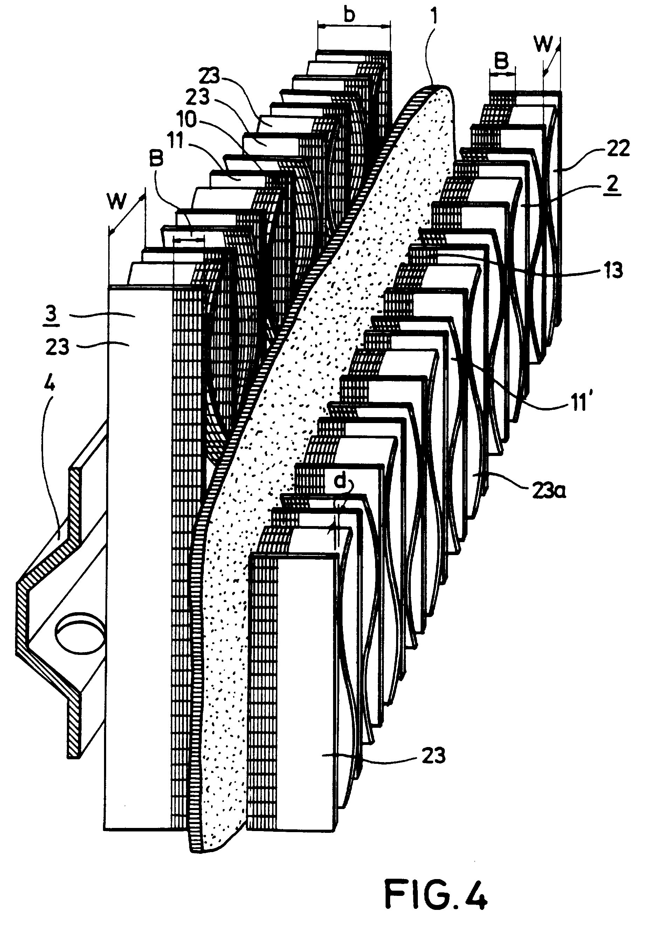

Fig. 1 zeigt eine Elektrolysezelle als Fallfilmapparat für die Chloralkalielektrolyse mit sauerstoffverzehrender Katode in schematischer Querschnittsdarstellung. Die Elektrolysezelle, deren detaillierterer Aufbau beispielshaft in einer schematisch-perspektivischen Darstellung in Fig. 4 gezeigt ist, besitzt in der Mitte einen plattenförmigen, elektrolytundurchlässigen, gaspermeablen Separator 1, an dem spaltfrei zu beiden Seiten, die ebenfalls in ihrer Gesamtkonfiguration plattenartigen Kapillarspaltelektroden 2 als Anode und 3 als Katode anliegen. Die Kapillarspaltelektroden 2 und 3 werden ihrerseits durch vertikal beabstandete Stromzuführungsschienen 4 gegen eine Wandung eines Gehäuses 5 der Elektrolysezelle abgestützt. Eine Zufuhr von Dünnlauge erfolgt von oben durch einen den Elektrolyten in einem Fallfilm an der Oberfläche des Separators 1 zuführenden Kapillarverteiler 6', der seinerseits aus einem Verteilerraum 6 und einem Verteilerboden 8, an dem sich eine keilförmige Verteilerrinne 9 zur Niveauregelung des zugeführten Elektrolyten über die gesamte Elektrodenbreite bzw. Breite des Separators 1 anschließt, sowie aus einem Kapillarverteiler 7 besteht. Dieser sorgt für einen gleichmäßig dicken Elektrolyt-Fallfilm entlang der Separatoroberfläche. Eine Spaltweite des Kapillarverteilers 7 bestimmt sich in Abhängigkeit von der erforderlichen Elektrolytmenge.

Der Aufbau der beiden, als Anode und Katode vorgesehenen Kapillarspaltelektroden 2, 3, der genauer aus Fig. 4 ersichtlich ist, ist derart getroffen, daß ein innenliegender, im Kontakt mit dem Separator 1 befindlicher streifenförmiger Abschnitt einen hydrophilen Reaktionsbereich 10 bzw. 13 bildet, in dem der Fallfilm-Elektrolyt unter Kapillarwirkung der Kapillarspaltelektrode 2, 3 in deren Kapillarspalten 22 (s. Fig. 4) aufgenommen und festgehalten ist, während der übrige, sich an den hydrophilen Reaktionsbereich 10, 13 nach außen anschließenden Bereich der Kapillarspaltelektroden 2, 3 einen hydrophoben Gastransportbereich 11, 11' bildet, dessen hydrophobe Eigenschaften, insbesondere hydrophobe Beschichtung, die Kapillarwirkung der Kapillarspalten 22 der Kapillarspaltelektrode 2 bzw. 3 übersteigt, so daß die hydrophoben, als Gastransportbereiche 11, 11' vorgesehenen Elektrodenabschnitte von Elektrolyt frei bleiben und sich der Fallfilm-Elektrolyt in einem schmalen, möglichst dünnen Film entlang des Separators 1 innerhalb des hydrophilen Reaktionsbereiches 10, 13 der Kapillarspaltelektroden 2, 3 ausbreitet. Der so erzeugte Elektrolyt-Fallfilm wird daher durch den hydrophilen Reaktionsbereich 10, 13 der in der vertikaler Richtung elektrolytdurchlässigen Kapillarspaltstruktur der Anode 2 bzw. Katode 3 im Kontakt mit dem Separator 1, der eine Membran oder ein Diaphragma ist, aufgenommen. Von außen wird der Elektrolysezelle Sauerstoff mit geringem Druck zugeführt, der durch einen Gaszuführungsraum 14 und die Kapillarspalte 22 des hydrophoben Gastransportbereiches 11 der Katode 3 gelangt. Der aufkonzentrierte Elektrolyt fließt als Fallfilm nach unten und wird aus einem Sammelraum 12 am Boden der Elektrolysezelle abgeführt. Der in Fig. 1 rechtsseitige Anodenteil besitzt eine entsprechende Funktion. Der Aufbau beider Kapillarspaltelektroden 2, 3 beiderseits des Separators 1 ist gleich. Über den Verteiler 6' wird Natriumchloridlösung zugeführt. Aus dem hydrophilen Reaktionsbereich 13 der Anode 2 gelangt das als elektrolytisches Reaktionsergebnis erhaltene Chlorgas durch die Kapillarspalte 22 der Anode 2 in den angrenzenden gasabführenden Raum 14 und von dort nach außen. Dünnsole wird aus einem Sammelraum 16 am Boden der Elektrolysezelle abgeleitet.

Die Konfiguration der Kapillarspaltelektroden selbst kann in verschiedener Weise erhalten werden, wie dies z.B. aus der DD-PS 285 127, DD-PS 285 128 bekannt ist. Die Kapillarspaltelektrode 2, 3 besteht jeweils aus planparallelen Elektrodenelementen 23, welche schmale Streifen bilden, die zur Bildung der Kapillarspalte 22 jeweils durch ein gewelltes Distanzierungs-Elektrodenelement 23a voneinander in Richtung der Hauptebene des Separators 1 distanziert sind. Innerhalb des hydrophilen Reaktionsbereiches 10, 13 kann der Elektrolyt auch vertikal durch die Kapillarspaltelektroden 2, 3 transportiert werden, da die gewellten Distanz-Elektrodenelemente 23a eine Kapillarwirkung in vertikaler, zum Separator 1 planparalleler Richtung innerhalb des hydrophilen Reaktionsbereiches 10, 13 praktisch nicht behindern.

Selbstverständlich können auch andere Elektrodenelement-Konfigurationen in Lamellen-, Bänderoder Folienstreifenform, mit integralen Sicken, Profilierungen etc. gewählt werden, wie dies aus dem Stand der Technik bekannt ist (vgl. z.B. auch WO 91/00379). Im vorliegenden Ausführungsbeispiel ist durch innige Anlage des jeweils innenliegenden hydrophilen Reaktionsbereiches 10, 13 an dem Separator 1 in diesem Elektrodenbereich ein ununterbrochener Elektrolytfilm geschaffen. Die hydrophobe Ausführung der Gastransportbereiche 11, 11' der Kapillarspaltelektroden 2, 3 führt hingegen dazu, daß der flüssigkeitsabweisende Effekt in diesen Teilen der Kapillarspaltelektroden 2, 3 den Kapillareffekt kompensiert, so daß die Elektroden in den Gastransportbereichen 11, 11' frei von Elektrolyt bleiben.

In einer bevorzugten Ausführungsform beträgt die Dicke d der Elektrodenelemente 23 bzw. der Distanzierungs-Elektrodenelemente 23a 0,01 bis 0,05 mm und die Weite W der Kapillarspalte 22 in Abhängigkeit vom Elektrolyseverfahren, der Betriebstemperatur, dem Betriebsdruck und der Art des Elektrolyts zwischen 0,05 und 0,25 mm. Die Breite b, die zugleich die Dicke der Kapillarspaltelektroden 2, 3 darstellt, beträgt zumindest das Zehnfache der Weite W der Kapillarspalte 22.

Der Elektrolyt soll in den hydrophilen Reaktionsbereichen 10, 13 der anodenseitigen und katodenseitigen Kapillarspaltelektrode 2, 3 möglichst dünn sein. Vorzugsweise beträgt eine Breite B des hydrophilen Reaktionsbereiches 10 bzw. 13 ca. 1/4 der Breite b der Elektrodenelemente 23 bzw. 23a, d.h. ca. 1/4 der Elektrodendicke.

Durch den hydrophilen Reaktionsbereich 10, 13, der mit Hilfe einer Elektrolyt anziehenden, hydrophilen, vorzugsweise kristallinen Beschichtung gebildet wird, ist eine Elektrolyt und Reaktionsgas innerhalb der Kapillarspaltelektrode 2, 3 separierende Führungseinrichtung geschaffen. Zugleich wird der Kapillareffekt in diesem Bereich verstärkt und bei dünner Filmdicke des Elektrolyten die Möglichkeit großer Baueinheiten der Elektrolysezelle mit entsprechend hohem Durchsatz pro Zeiteinheit geschaffen. Der hydrophobe Teil der Elektrodenelemente 23, 23a, der als Gastransportabschnitt für eine katodenseitige SauerstoffgasZufuhr und eine anodenseitige Chlorgas-Abfuhr dient, wird ebenfalls durch eine entsprechende, flüssigkeitsabweisende Beschichtung dieses Oberflächenabschnittes der Elektrodenelemente 23, 23a, z.B. durch eine fett- oder flüssigkeitsabweisende Polymerbeschichtung gebildet. Die Stromzufuhr erfolgt hier durch die unmittelbar an der hydrophoben Außenseite der Kapillarspaltelektroden 2, 3 anliegenden Stromschienen 4. Der Gastransport durch die Elektrode erfolgt vorzugsweise senkrecht zum Separator 1, d.h. in Richtung des elektrischen Feldes zwischen Anode 2 und Katode 3 in Verbindung mit den äußeren Gassammelräumen 14. Auf diese kann jedoch auch verzichtet werden, wie ein nachfolgend noch erläutertes Ausführungsbeispiel der Erfindung zeigt, wobei in diesem Fall die Abführung des Reaktionsgases aus den hydrophoben Teilen der Kapillarspalte 22 aufwärts stirnseitig zu den Kapillarspaltelektroden 2, 3, d.h. im wesentlichen parallel zu dem Separator 1 erfolgt.

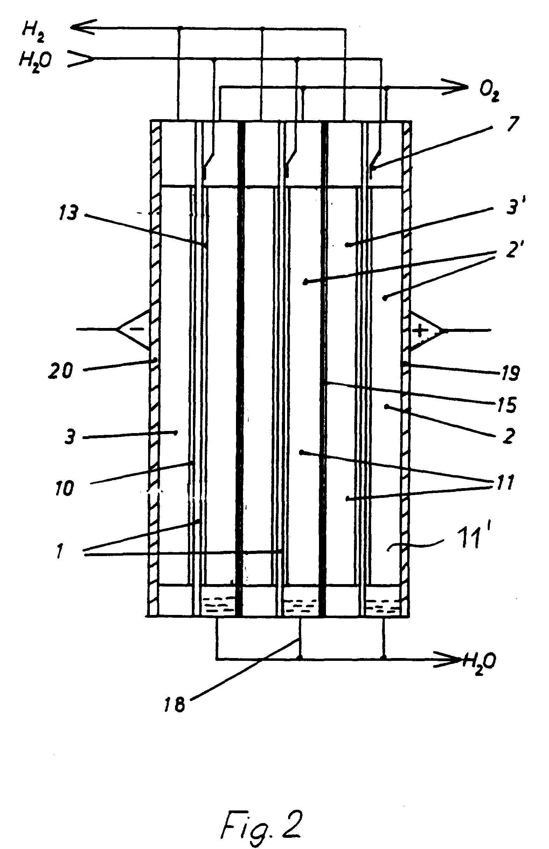

Fig. 2 zeigt SPE-Elektrolyseur (solid polymer electrolyt), d.h. einen Zellenblock, bestehend aus einer Mehrzahl von Zellenpaketen mit Feststoffelektrolyt, die ihrerseits wiederum aus einem Kapillarspalt-Elektrodenpaar als Anode 2 und Katode 3, getrennt durch z.B. eine Membran mit elektrolytischen Eigenschaften, besteht.

Herkömmliche SPE-Zellen zur Wasserelektrolyse weisen im allgemeinen eine Membran als Separator mit einer dünnen, porösen Elektrode als beiderseitige Beschichtung zur Bildung von Anode und Katode auf. Zur Zerlegung des Wassers wird das Zellenpaket im allgemeinen horizontal angeordnet und nur auf der Oberseite mit Waser geflutet. Die Anordnung hat dabei nur verhältnismäßig kleine Leistungen durch kleine Flächen.

In dem vorliegenden Ausführungsbeispiel kann mit Hilfe der bereits in Verbindung mit den Fig. 1 und 4 erläuterten Kapillarspaltelektroden-Anordnung und einem Wasserfallfilm der Elektrolyseur vorteilhaft in einem vertikalen Aufbau und sehr kompakt aufgebaut werden. Voraussetzung für einen derartig einfachen, kompakten Aufbau ist, daß die Elektrodenelemente 23 (vgl. beispielshaft Fig. 4) die als Anode und Katode spaltfrei an dem Separator 1 anliegende Kapillarspaltelektroden 2, 3 bilden, durchgehend elektrisch leitfähig sind, wobei wiederum eine Aufteilung der Kapillarspaltelektroden 2, 3 in den hydrophilen Reaktionsbereich 10 bzw. 13 und den größeren, hydrophoben Gastransportbereich 11, 11' (wie oben erläutert) erfolgt.

In diesem Fall dient der hydrophile Reaktionsbereich 10, 13 der Kapillarspaltelektroden 2, 3 (zur Speicherung und Aufnahme des Wassers als zu zerlegender Permeatflüssigkeit) in Form eines Filmes und hält diesen Wasserfilm fest, während die hydrophob charakterisierten Gastransportbereiche 11, 11' der Kapillarspaltelektroden 2, 3 von Wasser frei bleiben und der separierten Abführung von Sauerstoff und Wasserstoff dienen. Auf diese Weise lassen sich wesentlich größere Zellenabmessungen bei verringertem ohmschen Widerstand der Zelle und damit ein durch das spaltfreie Anliegen der Kapillarspaltelektroden an der Membran 1 unterstützter, wesentlich erhöhter Wirkungsgrad des Elektrolyseurs realisieren. Der SPE-Elektrolyseur gemäß Fig. 2 weist im vorliegenden Fall drei parallele, jeweils aus Kapillarspalt-Anode und -katode mit zwischenliegender Membran 1 bestehende Zellenpakete in Reihenanordnung auf, die innerhalb des bipolaren Zellenblockes durch jeweils eine dünne, elektrisch leitfähige Trennwand 15 verbunden sind.

Bei dieser Ausführungsform können unmittelbare Stromzuführungen zu den Kapillarspaltelektroden 2, 3 sowie Elektrolyträume und seitlich außenliegende Gasabführungsräume vollständig entfallen, so daß die Grundfläche des Elektrolyseurs wesentlich vermindert und ein äußerst kompakter Zellenblock erhalten werden kann. Auch in diesem Fall wird das verwendete reine Wasser auf Seiten der Anode durch den Kapillarverteiler 7 zugeführt. Auf diese Weise sind SPE-Zellen auch mit vertikalen Elektrodenanordnungen betriebsfähig. Überschüssiges Wasser gelangt über Sammler 18 aus dem Elektrolyseur. Die Gehäusewände 19, 20 dienen zugleich als anoden- bzw. katodenseitige Stromzuführung.

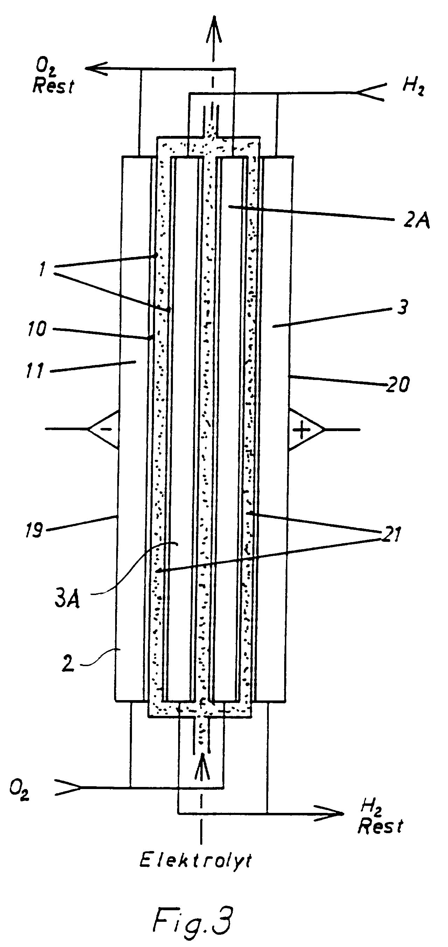

Fig. 3 zeigt ein weiteres Ausführungsbeispiel in Gestalt einer bipolaren Brennstoffzelle zur Stromerzeugung im vertikalen Querschnitt, wobei in bezug auf die Einzelheiten der Gestaltung der Kapillarspaltelektroden, die als Anode 2 bzw. Katode 3 verwendet werden, wiederum auf die vorangegangenen Figuren sowie Fig. 4 verwiesen wird. In diesem Fall sind drei Zellenpakete, bestehend jeweils aus Anode 2, Katode 3 und zumindest einem Separator 1 sowie zugehöriger Elektrolytzufuhr, durch insgesamt zwei Elektrodenpaare, d.h. durch je eine als Kapillarspaltelektrode mit innenliegendem, dem Elektrolyt sowie Separator 1 zugewandten hydrophilen Reaktionsbereich und übrigem hydrophoben Gastransportbereich ausgebildet. Die innenliegenden Elektroden, nämlich die Kapillarspalt-Katode 3A und die innenliegende Kapillarspalt-Anode 2A ein weiteres Elektrodenpaar und Zellenpaket bilden, so daß die innenliegenden Elektroden 2A, 3A jeweils zwei Zellenpaketen angehören. Zu diesem Zweck sind die Anode 2A und die Katode 3A jeweils beiderseits in einem Randbereich hydrophil beschichtet und weisen entlang ihrer beiden planparallelen Außenflächen einen hydrophilen Reaktionsbereich 10, 13 auf, während der innere Zentralbereich 11 der Anode 2A und der Katode 3A hydrophob zum vertikalen Gastransport gestaltet ist. In diesem Fall sind in Verbindung mit jeder Außenseite eines hydrophilen Reaktionsbereiches 10 der Kapillarspaltelektroden 2, 3, 2A, 3A jeweils Separatoren 1 vorgesehen, so daß die Elektrodenpaare 2, 3A, 3, 2A, 2A, 3A jeweils durch zwei Separatoren 1 getrennt sind, die wiederum je einen Elektrolytraum 21 einschließen. Die auf diese Weise gebildeten drei Elektrolyträume 21 sind miteinander stromauf und stromab der Kapillarspalt-Anoden 2, 2A bzw. Kapillarspalt-Katoden 3, 3A kommunizierend verbunden und werden vorzugsweise vom Elektrolyten bzw. sich bildendem Wasser von unten nach oben durchströmt (in Fig. 3 in Pfeilrichtung). Die hydrophilen Reaktionsbereiche 10, 13 der Anoden 2, 2A und Katoden 3, 3A sind benetzbar und bilden den Ort elektrolytischer Reaktion, während die übrigen hydrophoben Gastransportbereiche 11 der Zu- und Abfuhr der Reaktionsgase Wasserstoff und Sauerstoff der Brennstoffzelle dienen.

Der Brennstoff, z.B. Wasserstoff, wird den Katoden 3, 3A und der Sauerstoff bzw. Luft den Anoden 2, 2A unter Druck zugeführt. Hier nicht näher dargestellte, in Verbindung mit der außenliegenden Katode 3 bzw. Anode 2 vorgesehen, elektrisch leitfähige Gehäusewände 19, 20 dienen dem Stromabgriff. Entsprechend den Arbeitstemperaturen und verwendeten Elektrolyten werden die hydrophilen Reaktionsbereiche 10 der Kapillarspaltelektroden 2, 2A, 3, 3A mit entsprechenden Katalysatoren ausgestattet, bei einer alkalischen Niedertemperaturzelle, z.B. anodisch aus titandotiertem Nickel und katodisch aus nickeldotiertem Silber. Bei einer anderen Ausführung können die Katalysatoren auch auf den Separatoren 1 aufgebracht sein und die Kapillarspaltelektroden 2, 2A, 3, 3A allein dem Stofftransport sowie der ausgeglichenen Stromleitung dienen.

Im Vergleich zu dem Ausführungsbeispiel für einen Wasserelektrolyseur nach Fig. 2 entfallen hier die elektrisch leitfähigen Trennwände 15, so daß dadurch die Zellenpakete von Brennstoffzellen in Verbindung mit der multivalenten Nutzung der innenliegenden Elektroden 2A, 3A um ca. 50% in ihrer Dicke verringert werden können.

Nach dem Verfahren, der Kapillarspaltelektrode sowie den aus derartigen Kapillarspaltelektroden aufgebauten Elektrolysezellen lassen sich äußerst dicht gestapelte, großflächige Elektrolysereaktoren realisieren. Neben ihrer Kompaktheit besteht ein weiterer Vorteil dieser Elektrolysereaktoren darin, daß sie einen wesentlich niedrigeren ohmschen Widerstand als bekannte Elektrolysezellen besitzen, so daß mit höherem Strom bzw. verringertem Strombedarf gearbeitet werden kann und sowohl der Stoffdurchsatz pro Zeiteinheit als auch der Wirkungsgrad des jeweiligen Elektrolyseurs verbessert werden kann.

Eine weitere Erhöhung des Durchsatzes ergibt sich daraus, daß die Elektrolyseure mit höheren Drücken betrieben werden können. Die Herstellung der Kapillarspaltelektroden kann maschinell und damit äußerst effektiv erfolgen. Ihre Haltbarkeit ist sehr hoch, so daß sich eine lange Lebensdauer der Kapillarspaltelektroden und damit der Elektrolysezellen ergibt.

## Patentansprüche

1. Elektrolysezelle für gasentwickelnde oder gasverbrauchende elektrolytische Reaktionen, insbesondere für Chloralkali- oder Wasserelektrolyse oder als Brennstoffzelle zur Stromerzeugung, mit einem Elektrolyten oder Permeat und mit zumindest einem, durch wenigstens einen Separator getrennten Elektrodenpaar mit zumindest einer Kapillarspaltelektrode, **dadurch gekennzeichnet**, daß die Kapillarspaltelektrode (2, 3, 2A, 3A) zumindest einen hydrophilen, elektrolytisch aktiven Reaktionsbereich (10, 13) und einen hydrophoben, elektrolytisch inaktiven Gastransportbereich (11, 11') zur separaten Führung von Elektrolyt oder Permeat und Reaktionsgas aufweist und der Elektrolyt oder das Permeat entlang des hydrophilen, elektrolytisch aktiven Reaktionsbereiches (10, 13) zu der Kapillarspaltelektrode (2, 3, 2A, 3A) hin oder von dieser weg geführt ist.

2. Elektrolysezelle nach Anspruch 1, **dadurch gekennzeichnet**, daß der hydrophile Reaktionsbereich (10, 13) benachbart zu dem Separator (1) einen diesem zugewandten Elektrodenabschnitt und der Gastransportbereich (11, 11') einen entfernt von dem Separator (1) diesem abgewandten Elektrodenabschnitt bildet.

3. Elektrolysezelle nach Anspruch 1 oder 2, **dadurch gekennzeichnet**, daß der hydrophile Reaktionsbereich (10, 13) der Kapillarspaltelektrode (2, 2A, 3, 3A) in spaltfreier Verbindung mit dem Separator (1) angeordnet ist.

4. Elektrolysezelle nach zumindest einem der vorhergehenden Ansprüche 1 bis 3, **dadurch gekennzeichnet**, daß die Kapillarspaltelektrode (2, 2A, 3, 3A) aus einer Mehrzahl von Elektrodenelementen (23, 23a) besteht, die unter Bildung von im wesentlichen orthogonal zu dem Separator (1) verlaufenden Kapillarspalten (22) in Kontakt mit dem Separator (1) angeordnet sind, wobei eine Breite (B) des hydrophilen Reaktionsbereiches (10, 13) in Richtung orthogonal zu dem Separator (1) kleiner, vorzugsweise wesentlich kleiner als eine Breite des sich an den hydrophilen Reaktionsbereich (10, 13) anschließenden Gastransportbereiches (11, 11') der Elektrodenelemente (23, 23a) ist.

5. Elektrolysezelle nach Anspruch 4, **dadurch gekennzeichnet**, daß die Breite (B) des hydrophilen Reaktionsbereiches (10, 13) maximal ein Drittel, vorzugsweise ca. ein Viertel, der Breite (B) der Kapillarspaltelektrode (2, 2A, 3, 3A) in Richtung orthogonal zu dem Separator (1) beträgt.

6. Elektrolysezelle nach Anspruch 5, **dadurch gekennzeichnet**, daß die Kapillarspaltelektrode (2A, 2B) entlang gegenüberliegenden Außenseiten zwei hydrophile Reaktionsbereiche (10, 13) aufweist, getrennt durch den hydrophoben Gastransportbereich (11) im Mittelteil der Kapillarspaltelektrode (2A, 2B).

7. Elektrolysezelle nach zumindest einem der Ansprüche 4 bis 6, **dadurch gekennzeichnet**, daß eine Dicke (D) der Elektrodenelemente (23, 23a) ca. 0,01 bis 0,5 mm beträgt.

8. Elektrolysezelle nach zumindest einem der vorhergehenden Ansprüche 1 bis 7, **dadurch gekennzeichnet**, daß eine Weite (W) der Kapillarspalte (22) ca. 0,05 bis 0,25 mm beträgt.

9. Elektrolysezelle nach zumindest einem der Ansprüche 4 bis 8, **dadurch gekennzeichnet**, daß die Kapillarspaltelektrode (2, 2A, 3, 3A) aus alternierend angeordneten planparallelen Elektrodenelementen (23) und gewellten Distanzierungs-Elektrodenelementen (23a) besteht.

10. Elektrolysezelle nach zumindest einem der vorhergehenden Ansprüche 4 bis 9, **dadurch gekennzeichnet**, daß die Elektrodenelemente integrale Sicken oder Profilierungen zur gegenseitigen Beabstandung und Bildung der Kapillarspalte (22) aufweisen.

11. Elektrolysezelle nach zumindest einem der vorhergehenden Ansprüche 1 bis 10, **dadurch gekennzeichnet**, daß eine Dicke (D) der Kapillarspaltelektrode (2, 2A, 3, 3A) senkrecht zu dem Separator (1) zumindest das Zehnfache der Weite (W) der Kapillarspalte (22) beträgt.

12. Elektrolysezelle nach zumindest einem der vorhergehenden Ansprüche 1 bis 11, **dadurch gekennzeichnet**, daß die Elektrodenelemente (23, 23a) streifenförmig parallel zum Separator (1) hydrophil und hydrophob beschichtet sind, wobei die Breite (B) des separatornahen Elektrodenabschnittes hydrophiler Beschichtung ca. ein Viertel der Breite der im übrigen hydrophob beschichteten Elektrodenelemente (23, 23a) beträgt.

13. Elektrolysezelle nach zumindest einem der vorhergehenden Ansprüche 1 bis 12, **dadurch gekennzeichnet**, daß der Separator (1) ein Zuführungselement zur Elektrolytzuführung oder Permeatzuführung zu der Kapillarspaltelektrode (2, 2A, 3, 3A), insbesondere zu dem spaltfrei an dem Separator (1) anliegenden hydrophilen Reaktionsbereich (10, 13) derselben, ist.

14. Elektrolysezelle nach zumindest einem der vorhergehenden Ansprüche 1 bis 13, **dadurch gekennzeichnet**, daß der Separator (1) ein Diaphragma oder eine Membran ist.

15. Elektrolysezelle nach zumindest einem der vorhergehenden Ansprüche 1 bis 14, **dadurch gekennzeichnet**, daß als Anode und Katode jeweils eine Kapillarspaltelektrode (2, 2A, 3, 3A) in beiderseits spaltfreier Anlage an dem das Elektrodenpaar (2, 2A, 3, 3A) zu trennenden Separator (1) vorgesehen ist.

16. Elektrolysezelle nach zumindest einem der vorhergehenden Ansprüche 1 bis 15, **dadurch gekennzeichnet**, daß der Elektrolyt oder das Permeat einen Film entlang einer Grenzfläche der Kapillarspaltelektrode (2, 2A, 3, 3A) entlang des Separators (1) in dem hydrophilen Reaktionsbereich (10, 13) der Kapillarspaltelektrode (2, 2A, 3, 3A) bildet.

17. Elektrolysezelle nach zumindest einem der vorhergehenden Ansprüche 1 bis 16, **dadurch gekennzeichnet**, daß der Separator (1) und die Kapillarspaltelektrode (2, 2A, 3, 3A) vertikal angeordnet sind und sich entlang des Separators (1) oberhalb der Kapillarspaltelektrode (2, 2A, 3, 3A) eine Verteilereinrichtung (6', 6, 7, 8, 9) für eine Zufuhr von Elektrolyt oder Permeat in einem Fallfilm zu der Kapillarspaltelektrode (2, 2A, 3, 3A) entlang des Separators (1) erstreckt.

18. Elektrolysezelle nach zumindest einem der vorhergehenden Ansprüche 1 bis 17, **dadurch gekennzeichnet**, daß ein Gaszuführungs- oder Gasabführungsraum (14) lateral außenliegend und/oder axial oberhalb im Anschluß an den hydrophoben Gastransportbereich (11, 11') der Kapillarspaltelektrode (2A, 3, 3A) vorgesehen ist.

19. Elektrolysezelle nach zumindest einem der vorhergehenden Ansprüche 1 bis 18, **dadurch gekennzeichnet**, daß das Elektrodenpaar durchgehend elektrisch leitfähig ist.

20. Elektrolysezelle nach zumindest einem der vorhergehenden Ansprüche 1 bis 19, **dadurch gekennzeichnet**, daß der Separator (1) mit den als Anode und Katode an diesem anliegenden Kapillarspaltelektroden (2, 3) plattenförmig ausgebildet und zu einem Zellenpaket verbunden ist, wobei eine Mehrzahl seitlich und vertikal beabstandet von außen an den Kapillarspaltelektroden (2, 3) anliegende Stromzuführungsschienen (4) Stütz- und Distanzierungselemente gegen ein das Zellenpaket aufnehmendes Gehäuse (5) bilden.

21. Elektrolysezelle nach Anspruch 20, **dadurch gekennzeichnet**, daß eine Mehrzahl von Zellenpaketen, bestehend jeweils aus einem Kapillarspaltelektrodenpaar (2, 3) mit zwischenliegendem Separator (1) in planarer Anordnung, getrennt durch vorzugsweise elektrisch leitfähige Trennwände (15), vorgesehen ist, wobei einander gegenüberliegende Außenwandungen (19, 20) des Gehäuses als Stromzuführungselemente vorgesehen sind.

22. Elektrolysezelle nach zumindest einem der vorhergehenden Ansprüche 1 bis 21,**dadurch gekennzeichnet**, daß zwischen Anode (2, 2A) und Katode (3, 3A) ein Elektrolytraum (21) vorgesehen ist, dessen Wandungen elektrolytpermeable Separatoren (1) in spaltfreier Verbindung zu der als Kapillarspaltelektrode ausgeführten Anode (2, 2A) oder Katode (3, 3A) bilden.

23. Elektrolysezelle nach Anspruch 22, **dadurch gekennzeichnet**, daß eine Mehrzahl plattenförmiger Elektrodenpaare (2, 2A, 3, 3A) abfolgend angeordnet ist und die Elektrolyträume (21) stromauf und/oder stromab der Elektrodenpaare (2, 2A, 3, 3A) oberhalb und/oder unterhalb derselben kommunizierend miteinander verbunden sind.

24. Elektrolysezelle nach Anspruch 23, **dadurch gekennzeichnet**, daß eine Kapillarspaltelektrode (2A, 3A) eines ersten Elektrodenpaares (2, 2A, 3, 3A) zugleich eine Elektrode eines weiteren Elektrodenpaares (2A, 3A) bildet und diese Kapillarspaltelektrode (2A, 3A) entlang ihrer separatornahen, gegenüberliegenden Außenseiten zwei hydrophile Reaktionsbereiche (10, 13) aufweist.

25. Kapillarspaltelektrode für gasentwickelnde oder gasverbrauchende elektrolytische Reaktionen, insbesondere für Chloralkali- oder Wasserelektrolyse oder als Brennstoffzelle zur Stromerzeugung, mit einer Mehrzahl beabstandeter Elektrodenelemente, zwischen denen Kapillarspalte gebildet sind, **dadurch gekennzeichnet**, daß die Kapillarspaltelektrode (2, 2A, 3, 3A) zumindest einen hydrophilen, elektrolytisch aktiven Reaktionsbereich (10, 13) und einen hydrophoben, elektrolytisch inaktiven Gastransportbereich (11, 11') zur separaten Führung von Elektrolyt oder Permeat und Reaktionsgas aufweist und eine Benetzung der Kapillarspaltelektrode durch Elektrolyt oder Permeat entlang des hydrophilen, elektrolytisch aktiven Reaktionsbereiches (10, 13) der Kapillarspaltelektrode (2, 2A, 3, 3A) erfolgt.

26. Kapillarspaltelektrode nach Anspruch 25, **dadurch gekennzeichnet**, daß in Verbindung mit dem hydrophilen Reaktionsbereich (10, 13) ein Separator vorgesehen ist.

27. Kapillarspaltelektrode nach Anspruch 25 oder 26, **dadurch gekennzeichnet**, daß die Dicke (d) der Elektrodenelemente (23, 23a) ca. 0,01 bis 0,05 mm beträgt.

28. Kapillarspaltelektrode nach zumindest einem der vorhergehenden Ansprüche 25 bis 27, **dadurch gekennzeichnet**, daß die Weite (W) der Kapillarspalte (22) zwischen zumindest im wesentlichen parallel zueinander angeordneten Elektrodenelementen (22) ca. 0,05 mm bis 0,25 mm beträgt.

29. Kapillarspaltelektrode nach zumindest einem der vorhergehenden Ansprüche 25 bis 28, **dadurch gekennzeichnet**, daß die Kapillarspaltelektrode (2, 2A, 3, 3A) aus alternierend angeordneten planparallelen Elektrodenelementen (23) und gewellten Distanzierungs-Elektrodenelementen (23a) besteht.

30. Kapillarspaltelektrode nach zumindest einem der vorhergehenden Ansprüche 25 bis 29, **dadurch gekennzeichnet**, daß die Elektrodenelemente integrale Sicken oder Profilierungen zur gegenseitigen Beabstandung und Bildung der Kapillarspalte (22) aufweisen.

31. Kapillarspaltelektrode nach zumindest einem der vorhergehenden Ansprüche 25 bis 30, **dadurch gekennzeichnet**, daß eine die Dicke der Kapillarspaltelektrode (2, 2A, 3, 3A) bestimmende Breite (B) der Elektrodenelemente (23, 23a) zumindest das 10-fache der Weite (W) der Kapillarspalte (22) beträgt.

32. Kapillarspaltelektrode nach zumindest einem der vorhergehenden Ansprüche 25 bis 31, **dadurch gekennzeichnet**, daß eine Breite (B) des hydrophilen Reaktionsbereiches (10, 13) der Elektrodenelemente (23, 23a) ca. ein Viertel der Breite (B) der Elektrodenelemente (23, 23a) beträgt.

33. Kapillarspaltelektrode nach zumindest einem der vorhergehenden Ansprüche 25 bis 32, **dadurch gekennzeichnet**, daß die Kapillarspaltelektrode (2A, 2B) entlang gegenüberliegender Außenseiten zwei hydrophile Reaktionsbereiche (10, 13) aufweist, getrennt durch den hydrophoben Gastransportbereich (11) im Mittelteil der Kapillarspaltelektrode (2A, 2B).

34. Elektrolyseverfahren für gasentwickelnde oder gasverbrauchende Prozesse in Elektrolysezellen mit zumindest einem Elektrodenpaar, wobei zumindest eine der Elektroden eine Kapillarspaltelektrode ist, die von der weiteren Elektrode durch zumindest einen Separator getrennt ist, mit einer Elektrolysezelle nach Anspruch 1, wobei der Elektrolyt oder das Permeat und das entstehende oder zu verbrauchende Reaktionsgas zumindest im wesentlichen innerhalb der Kapillarspaltelektrode (2, 2A, 3, 3A) getrennt geführt werden und der Elektrolyt im wesentlichen den Gastransport und der Gastransport im wesentlichen die elektrolytische Reaktion unbeeinflußt läßt, und wobei der Elektrolyt oder Permeat entlang des Separators zu der Kapillarspaltelektrode hin oder von dieser weg geführt wird.

35. Verfahren nach Anspruch 34, **dadurch gekennzeichnet**, daß in der Kapillarspaltelektrode (2, 2A, 3, 3A) ein dem Separator zugewandter, mit Elektrolyt gefüllter, hydrophiler Reaktionsbereich (10, 13) sowie ein den größten Teil der Kapillarspaltelektrode (2, 2A, 3, 3A) umfassender, im wesentlichen von Elektrolyt freier Gastransportbereich (11, 11') gebildet wird und das Reaktionsgas im wesentlichen senkrecht und/oder parallel zu dem Separator (1) durch den im wesentlichen von Elektrolyt freien, hydrophoben Gastransportbereichen (11, 11') der Kapillarspalte (22) der Kapillarspaltelektrode (2, 2A, 3, 3A) zu deren elektrolytgefülltem, hydrophilen Reaktionsbereich (10, 13) hin oder aus diesem heraus (durch diesen hindurch) von dem elektrolytgefüllten, hydrophilen Reaktionsbereich (10, 13) weggeführt wird.

36. Verfahren nach Anspruch 34 oder 35, **dadurch gekennzeichnet**, daß der Elektrolyt oder das Permeat nur einem am Separator (1) anliegenden, inneren, hydrophilen Reaktionsbereich (10, 13) zugeführt und anschließend in dem hydrophilen Reaktionsbereich (10, 13) kapillarisch ausgebreitet wird, während der dem Separator (1) abgewandte hydrophobe Gastransportbereich (11, 11') im wesentlichen frei von Elektrolyt gehalten wird.

37. Verfahren nach zumindest einem der vorhergehenden Ansprüche 34 bis 36, **dadurch gekennzeichnet**, daß der Elektrolyt oder Wasser der Kapillarspaltelektrode (2, 2A, 3, 3A) durch den Separator (1) zugeführt wird.

38. Verfahren nach zumindest einem der vorhergehenden Ansprüche 34 bis 37, **dadurch gekennzeichnet**, daß der Elektrolyt oder das Permeat, insbesondere Wasser, im wesentlichen senkrecht zur Transportrichtung des Reaktionsgases entlang des Separators (1), vorzugsweise als Fallfilm, dem Elektrolyt aufnehmenden, hydrophilen Reaktionsbereich (10, 13) der Kapillarspaltelektrode zugeführt wird.

39. Verfahren nach zumindest einem der vorhergehenden Ansprüche 34 bis 38, **dadurch gekennzeichnet**, daß der Elektrolyt in einem zwischen Anode (2, 2A) und Katode (3, 3A) befindlichen Elektrolytraum (21) gefördert und durch die als elektrolytpermeablen Separator (1) ausgeführte Wandung des Elektrolytraumes (21) der als Anode und/oder Katode vorgesehenen Kapillarspaltelektrode (2, 2A, 3, 3A) zugeführt wird.

40. Verfahren nach Anspruch 39 , **dadurch gekennzeichnet**, daß der Elektrolyt den entlang gegenüberliegender Außenseiten je einen hydrophilen Reaktionsbereich aufweisenden Kapillarspaltelektroden (2A, 3A) von zwei Seiten her durch je einen Separator (1) zugeführt wird.

41. Verfahren nach zumindest einem der vorhergehenden Ansprüche 34 bis 40, **dadurch gekennzeichnet**, daß der Elektrolyt oder das Permeat, insbesondere Wasser, der Kapillarspaltelektrode (2, 3) in Form eines Fallfilmes entlang einer Oberfläche des Separators zugeführt wird.

42. Verfahren nach zumindest einem der vorhergehenden Ansprüche 34 bis 41, **dadurch gekennzeichnet**, daß der Elektrolyt oder das Permeat der Oberfläche des Separators (1) von oben nahe einer Oberseite der Kapillarspaltelektrode (2, 3) zugeführt wird.

43. Verfahren nach zumindest einem der vorhergehenden Ansprüche 34 bis 42, **dadurch gekennzeichnet**, daß das Reaktionsgas durch Bereiche in der Kapillarspaltelektrode (2, 2A, 3, 3A) abgeführt bzw. zugeführt wird, die frei von Elektrolyt sind.

44. Verfahren nach zumindest einem der vorhergehenden Ansprüche 34 bis 43, **dadurch gekennzeichnet**, daß das Reaktionsgas auf einer von dem Separator (1) abgewandten Seite der Kapillarspaltelektrode (2, 3) aus dieser abgeführt bzw. dieser zugeführt wird.

45. Verfahren nach zumindest einem der vorhergehenden Ansprüche 34 bis 44, **dadurch gekennzeichnet**, daß der von oben der Kapillarspaltelektrode (2, 3) zugeführte Fallfilm aus Elektrolyt oder Permeat in der Kapillarspaltelektrode (2, 3) auf die gesamte, am Separator (1) anliegende Seite der Kapillarspaltelektrode (2, 2A, 3, 3A) ausgebreitet und in dieser Form aufrechterhalten wird, und daß das Reaktionsgas durch die vom Elektrolyt oder Permeat, insbesondere Wasser, freien Kapillarspalte (22) der Kapillarspaltelektrode (2, 3) im wesentlichen senkrecht zum Separator (1) ab- bzw. zugeführt wird.

## Claims

1. An electrolytic cell for gas-evolving or gas-consuming electrolytic reactions, particularly for chlor-alkali or water electrolysis or as a fuel cell for electricity generation, comprising an electrolyte or permeate and at least one pair of electrodes separated by at least one separator and comprising at least one capillary gap electrode, characterised in that the capillary gap electrode (2, 3, 2A, 3A) comprises at least one hydrophilic electrolytically active reaction zone (10, 13) and one hydrophobic electrolytically inactive gas transport zone (11, 11') for separately supplying electrolyte or permeate and reaction gas, and the electrolyte or permeate is conveyed along the hydrophilic electrolytically active reaction zone (10, 13) to or away from the capillary gap electrode (2, 3, 2A, 3A).

2. An electrolytic cell according to claim 1, characterised in that the hydrophilic reaction zone (10, 13) forms an electrode portion facing and adjacent the separator (1) and the gas transport zone (11, 11') forms an electrode portion facing away from and remote from the separator (1).

3. An electrolytic cell according to claim 1 or 2, characterised in that the hydrophilic reaction zone (10, 13) of the capillary gap electrode (2, 2A, 3, 3A) is gaplessly connected to the separator (1).

4. An electrolytic cell according to at least one of the preceding claims 1 to 3, characterised in that the capillary gap electrode (2, 2A, 3, 3A) comprises a number of electrode elements (23, 23a) which form capillary gaps (22) extending substantially at right angles to the separator (1) and are disposed in contact with the separator (1), a breadth (B) of the hydrophilic reaction zone (10, 13) in the direction at right angles to the separator (1) being less, preferably considerably less, than a breadth of the gas transport zone (11, 11') of the electrode elements (23, 23a) which is adjacent the hydrophilic reaction zone (10, 13).

5. An electrolytic cell according to claim 4, characterised in that the breadth (B) of the hydrophilic reaction zone (10, 13) is not more than one third, preferably about one quarter, of the breadth (B) of the capillary gap electrode (2, 2A, 3, 3A) in the direction at right angles to the separator (1).

6. An electrolytic cell according to claim 5, characterised in that the capillary gap electrode (2A, 2B) has two hydrophilic reaction zones (10, 13) along opposite outsides, separated by the hydrophobic gas transport zone (11) in the middle part of the capillary gap electrode (2A, 2B).

7. An electrolytic cell according to at least one of claims 4 to 6, characterised in that a thickness (D) of the electrode elements (23, 23a) is about 0.01 to 0.5 mm.

8. An electrolytic cell according to at least one of the preceding claims 1 to 7, characterised in that a width (W) of the capillary gaps (23) is about 0.05 to 0.25 mm.

9. An electrolytic cell according to at least one of claims 4 to 8, characterised in that the capillary gap electrode (2, 2A, 3, 3A) comprises alternating plane-parallel electrode elements (23) and corrugated spacing electrode elements (23a).

10. An electrolytic cell according to at least one of the preceding claims 4 to 9, characterised in that the electrode elements have integral beads or profilings for reciprocal spacing and for forming the capillary gaps (22).

11. An electrolytic cell according to at least one of the preceding claims 1 to 10, characterised in that a thickness (D) of the capillary gap electrode (2, 2A, 3, 3A) perpendicular to the separator (1) is at least ten times the width (W) of the capillary gaps (22).

12. An electrolytic cell according to at least one of the preceding claims 1 to 11, characterised in that the electrode elements (23, 23a) have hydrophilic and hydrophobic coatings in strips parallel to the separator (1), the breadth (B) of the hydrophilically coated electrode portion near the separator being about one quarter of the breadth of the remaining part of the electrode elements (23, 23a) which have a hydrophobic coating.

13. An electrolytic cell according to at least one of the preceding claims 1 to 12, characterised in that the separator (1) is a supply element for supplying electrolyte or supplying permeate to the capillary gap electrode (2, 2A, 3, 3A), more particularly to the hydrophilic reaction zone (10, 13) gaplessly adjacent the separator (1).

14. An electrolytic cell according to at least one of the preceding claims 1 to 13, characterised in that the separator (1) is a diaphragm or a membrane.

15. An electrolytic cell according to at least one of the preceding claims 1 to 14, characterised in that the anode and cathode are each a capillary gap electrode (2, 2A, 3, 3A) gaplessly adjacent the two sides of the separator (1) for separating the pair of electrodes (2, 2A, 3, 3A).

16. An electrolytic cell according to at least one of the preceding claims 1 to 15, characterised in that the electrolyte or the permeate forms a film along a boundary surface of the capillary gap electrode (2, 2A, 3, 3A) along the separator (1) in the hydrophilic reaction zone (10, 13) of the capillary gap electrode (2, 2A, 3, 3A).

17. An electrolytic cell according to at least one of the preceding claims 1 to 16, characterised in that the separator (1) and the capillary gap electrode (2, 2A, 3, 3A) are vertically disposed and a distribution device (6', 6, 7, 8, 9) for supplying electrolyte or permeate in a falling film to the capillary gap electrode (2, 2A, 3, 3A) extends along the separator (1) above the capillary gap electrode (2, 2A, 3, 3A).

18. An electrolytic cell according to at least one of the preceding claims 1 to 17, characterised in that a gas supply or gas discharge space (14) is provided laterally outside and/or axially above and adjoining the hydrophobic gas transport zone (11, 11') of the capillary gap electrode (2A, 3, 3A).

19. An electrolytic cell according to at least one of the preceding claims 1 to 18, characterised in that the pair of electrodes are permanently electrically conductive.

20. An electrolytic cell according to at least one of the preceding claims 1 to 19, characterised in that the separator (1) and the adjacent capillary gap electrodes (2, 3) in the form of an anode and cathode are plate-shaped and combined to form a set of cells, a number of laterally and vertically spaced busbars (4) adjacent the exterior of the capillary gap electrodes (2, 3) forming supporting and spacing elements against a casing (5) which receives the set of cells.

21. An electrolytic cell according to claim 20, characterised in that a number of sets of cells, each comprising a pair of capillary gap electrodes (2, 3) with an interposed separator (1) in a planar arrangement, separated by preferably electrically conducting partitions (15), are provided, and facing outer walls (19, 20) of the casing are in the form of electricity supply elements.

22. An electrolytic cell according to at least one of the preceding claims 1 to 21, characterised in that an electrolyte space (21) is disposed between the anode (2, 2A) and cathode (3, 3A) and its walls form electrolyte-permeable separators (1) gaplessly connected to the anode (2, 2A) or cathode (3, 3A) constructed as a capillary gap electrode.

23. An electrolytic cell according to claim 22, characterised in that a number of plate-shaped pairs of electrodes (2, 2A, 3, 3A) are disposed in succession and the electrolyte spaces (21) upstream and/or downstream of the pairs of electrodes (2, 2A, 3, 3A) are connected and communicate with one another above and/or below the electrode pairs.

24. An electrolytic cell according to claim 23, characterised in that a capillary gap electrode (2A, 3A) of a first electrode pair (2, 2A, 3, 3A) also constitutes an electrode of another electrode pair (2A, 3A) and this capillary gap electrode (2A, 3A) has two hydrophilic reaction zones (10, 13) along its facing outsides near the separator.

25. A capillary gap electrode for gas-evolving or gasconsuming electrolytic reactions, particularly for chlor-alkali or water electrolysis or as a fuel cell for electricity generation, comprising a number of spaced-apart electrode elements, between which capillary gaps are formed, characterised in that the capillary gap electrode (2, 2A, 3, 3A) has at least one hydrophilic electrolytically active reaction zone (10, 13) and one hydrophobic electrolytically inactive gas transport zone (11, 11') for separately supplying electrolyte or permeate and reaction gas, and the capillary gap electrode is wetted by electrolyte or permeate along the hydrophilic electrolytically active reaction zone (10, 13) of the capillary gap electrode (2, 2A, 3, 3A).

26. A capillary gap electrode according to claim 25, characterised in that a separator is provided in conjunction with the hydrophilic reaction zone (10, 13).

27. A capillary gap electrode according to claim 25 or 26, characterised in that the thickness (d) of the electrode elements (23, 23a) is about 0.01 to 0.05 mm.

28. A capillary gap electrode according to at least one of the preceding claims 25 to 27, characterised in that the width (W) of the capillary gaps (22) between at least substantially parallel electrode elements (22) is about 0.05 mm to 0.25 mm.

29. A capillary gap electrode according to at least one of the preceding claims 25 to 28, characterised in that the capillary gap electrode (2, 2A, 3, 3A) comprises alternating plane-parallel electrode elements (23) and corrugated spacing electrode elements (23a).

30. A capillary gap electrode according to at least one of the preceding claims 25 to 29, characterised in that the electrode elements have integral beads or profiling for reciprocal spacing and for forming the capillary gaps (22).

31. A capillary gap electrode according to at least one of the preceding claims 25 to 30, characterised in that a breadth (B) of the electrode elements (23, 23a) determining the thickness of the capillary gap electrode (2, 2A, 3, 3A) is at least ten times the width (W) of the capillary gaps (22).

32. A capillary gap electrode according to at least one of the preceding claims 25 to 31, characterised in that a breadth (B) of the hydrophilic reaction zone (10, 13) of the electrode elements (23, 23a) is about one quarter of the breadth (B) of the electrode elements (23, 23a).

33. A capillary gap electrode according to at least one of the preceding claims 25 to 32, characterised in that the capillary gap electrode (2A, 2B) has two hydrophilic reaction zones (10, 13) along facing outsides, separated by the hydrophobic gas transport zone (11) in the middle part of the capillary gap electrode (2A, 2B).

34. A method of electrolysis for gas-evolving or gasconsuming processes in electrolytic cells comprising at least one pair of electrodes, wherein at least one of the electrodes is a capillary gap electrode separated from the other electrode by at least one separator, comprising an electrolytic cell according to claim 1, wherein the electrolyte or the permeate and the evolved or consumable reaction gas are separately conveyed at least substantially inside the capillary gap electrode (2, 2A, 3, 3A) and the electrode is substantially without influence on the gas transport and the gas transport is substantially without influence on the electrolytic reaction, and wherein the electrolyte or the permeate is conveyed along the separator to or from the capillary gap electrode.

35. A method according to claim 34, characterised in that a hydrophilic reaction zone (10, 13) facing the separator and filled with electrolyte and a gas transport zone (11, 11') comprising most of the capillary gap electrode (2, 2A, 3, 3A) and substantially free from electrolyte are formed in the capillary gap electrode (2, 2A, 3, 3A) and the reaction gas is conveyed substantially at right angles and/or parallel to the separator (1) through the substantially electrolyte-free hydrophobic gas transport zones (11, 11') of the capillary gaps (22) of the capillary gap electrode (2, 2A, 3, 3A) to the electrolyte-filled hydrophilic reaction zone (10, 13) thereof or therefrom (or therethrough) away from the electrolyte-filled, hydrophilic reaction zone (10, 13).

36. A method according to claim 34 or 35, characterised in that the electrolyte or the permeate is supplied only to an inner hydrophilic reaction zone (10, 13) adjacent the separator (1) and subsequently spreads into the hydrophilic reaction zone (10, 13) by capillary action, whereas the hydrophobic gas transport zone (11, 11') remote from the separator (1) is kept substantially free from electrolyte.

37. A method according to at least one of the preceding claims 34 to 36, characterised in that the electrolyte or water is supplied to the capillary gap electrode (2, 2A, 3, 3A) through the separator (1).

38. A method according to at least one of the preceding claims 34 to 37, characterised in that the electrolyte or the permeate, particularly water, is supplied substantially at right angles to the transport direction of the reaction gas along the separator (1), preferably in a falling film, to the electrolyte-containing hydrophilic reaction zone (10, 13) of the capillary gap electrode.

39. A method according to at least one of the preceding claims 34 to 38, characterised in that the electrolyte is conveyed into an electrolyte space (21) between the anode (2, 2A) and cathode (3, 3A) and supplied through the wall, in the form of an electrolyte-permeable separator (1), of the electrolyte space (21) in the capillary gap electrode (2, 2A, 3, 3A) provided in the form of an anode and/or cathode.

40. A method according to claim 39, characterised in that the electrolyte is supplied to the facing outsides of capillary gap electrodes (2A, 3A) having respective hydrophilic reaction zones, from two sides through a respective separator (1).

41. A method according to at least one of the preceding claims 34 to 40, characterised in that the electrolyte or permeate, particularly water, is supplied in the form of a falling film to the capillary gap electrode (2, 3) along a surface of the separator.

42. A method according to at least one of the preceding claims 34 to 41, characterised in that the electrolyte or the permeate is supplied to the surface of the separator (1) from above near a top surface of the capillary gap electrode (2, 3).

43. A method according to at least one of the preceding claims 34 to 42, characterised in that the reaction gas is supplied or discharged through zones in the capillary gap electrode (2, 2A, 3, 3A) which are free from electrolyte.

44. A method according to at least one of the preceding claims 34 to 43, characterised in that the reaction gas is removed from or supplied to the capillary gap electrode (2, 3) on a side remote from the separator (1).

45. A method according to at least one of the preceding claims 34 to 44, characterised in that the falling film of electrolyte or permeate supplied from above to the capillary gap electrode (2, 3) spreads in the capillary gap electrode (2, 3) over the entire side of the capillary gap electrode (2, 2A, 3, 3A) adjacent the separator (1) and is maintained in this form, and the reaction gas is discharged or supplied substantially at right angles to the separator (1) through the capillary gaps (22) of the capillary gap electrode (2, 3) which are free from electrolyte or permeate, particularly water.

## Revendications

1. Cellule d'électrolyse pour réactions électrolytiques dégageant ou consommant des gaz, en particulier pour l'électrolyse à l'alcali et au chlore ou de l'eau ou comme pile à combustible pour produire de l'électricité, avec un électrolyte ou un perméat et au moins une paire d'électrodes séparées au moins par un séparateur, caractérisée en ce que l'électrode capillaire à fente (2, 3, 2A, 3A) comprend au moins une zone de réaction hydrophile, active électrolytiquement (10, 13) et une zone de transport de gaz (11, 114) pour la conduite séparée de l'électrolyte ou du perméat et du gaz de réaction, et en ce que l'électrolyte ou le perméat est amené le long de la zone de réaction hydrophile active électrolytiquement (10, 13) vers l'électrode capillaire à fente (2, 3, 2A, 3A) ou en s'éloignant de celle-ci.

2. Cellule d'électrolyse selon la revendication 1, caractérisée en ce que la zone de réaction hydrophile (10, 13) voisine du séparateur (1) forme un segment d'électrode tourné vers celui-ci et que la zone de transport des gaz (11, 11') forme un segment d'électrode éloigné du séparateur (1) et détourné de celui-ci.

3. Cellule d'électrolyse selon la revendication 1 ou 2, caractérisée en ce que la zone hydrophile de réaction (10, 13) de l'électrode capillaire à fente (2, 2A, 3, 3A) est disposée en assemblage sans fente avec le séparateur (1) .

4. Cellule d'électrolyse selon au moins l'une quelconque des revendications 1 à 3 précédentes, caractérisée en ce que l'électrode capillaire à fente (2, 2A, 3, 3A) consiste en une pluralité d'éléments d'électrode (22, 23a) qui sont disposés au contact du séparateur (1) en formant des fentes capillaires (22) à position essentiellement orthogonale par rapport au séparateur (1), une largeur (B) de la zone hydrophile de réaction (10, 13) étant plus petite et de préférence sensiblement plus petite qu'une largeur de la zone de transport des gaz (11, 11') des éléments d'électrode (23, 23a) qui se rattache à la zone hydrophile de réaction (10, 13).

5. Cellule d'électrolyse selon la revendication 4, caractérisée en ce que la largeur (B) de la zone hydrophile de réaction (10, 13) couvre au maximum un tiers et de préférence environ un quart de la largeur (B) de l'électrode capillaire à fente (2, 2A, 3, 3A) dans le sens orthogonal au séparateur (1).

6. Cellule d'électrolyse selon la revendication 5, caractérisée en ce que l'électrode capillaire à fente (2A, 2B) comprend, le long de côtés extérieurs opposés, deux zones hydrophiles de réaction (10, 13) séparées par la zone hydrophobe de transport de gaz (11) dans la partie centrale de l'électrode capillaire à fente (2A, 2B).

7. Cellule d'électrolyse selon au moins l'une des revendications 4 à 6, caractérisée en ce qu'une épaisseur (D) de l'élément d'électrode (23, 23a) mesure au moins environ 0,01 à 0,05 mm.

8. Cellule d'électrolyse selon au moins l'une des revendications 1 à 7 précédentes, caractérisée en ce qu'un diamètre intérieur (W) de la fente capillaire (22) mesure environ 0,05 à 0,25 mm.

9. Cellule d'électrolyse selon au moins l'une des revendications 4 à 8, caractérisée en ce que l'électrode capillaire à fente (2, 2A, 3, 3A) se compose d'éléments d'électrode parallélépipédiques (23) disposés de façon alternée et d'éléments ondulés d'écart d'électrode (23a).

10. Cellule d'électrolyse selon au moins l'une des revendications précédentes 4 à 9, caractérisée en ce que les éléments d'électrode comprennent des moulures intégrées ou des profilements pour l'écartement réciproque et la formation des fentes capillaires (22).

11. Cellule d'électrolyse selon au moins l'une des revendications précédentes 1 à 10, caractérisée en ce qu'une épaisseur (D) de l'électrode capillaire à fente (2, 2A, 3, 3A) mesure au moins dix fois le diamètre intérieur (W) de la fente capillaire (22).

12. Cellule d'électrolyse selon au moins l'une des revendications précédentes 1 à 11, caractérisée en ce que les éléments d'électrode (22, 23a) sont revêtus de façon hydrophile et hydrophobe par bandes parallèles au séparateur (1), la largeur (B) du segment d'électrode proche du séparateur comprend un revêtement hydrophile qui mesure environ un quart de la largeur des autres éléments d'électrode à revêtement hydrophobe (23, 23a).

13. Cellule d'électrolyse selon au moins l'une des revendications précédentes 1 à 12, caractérisée en ce que le séparateur (1) est un élément d'amenée d'électrolyte ou de perméat à l'électrode capillaire à fente (2, 2A, 3, 3A), en particulier à la zone de réaction (10, 13) sans fente de celui-ci attenant au séparateur (1)

14. Cellule d'électrolyse selon au moins l'une quelconque des revendications précédentes 1 à 13, caractérisée en ce que le séparateur (1) est un diaphragme ou une membrane.

15. Cellule d'électrolyse selon au moins l'une des revendications précédentes 1 à 14, caractérisée en ce qu'il est prévu chaque fois comme anode et cathode une électrode capillaire à fente (2, 2A, 3, 3A) appliquée sans fente des deux côtés de la paire d'électrodes contre le séparateur (1) qui doit séparer la paire d'électrodes (2, 2A, 3, 3A).

16. Cellule d'électrolyse selon au moins l'une des revendications précédentes 1 à 15, caractérisée en ce que l'électrolyte ou le perméat forme une pellicule le long d'une surface limite de l'électrode capillaire à fente (2, 2A, 3, 3A) le long du séparateur (1) dans la zone de réaction hydrophile (10, 13) de l'électrode capillaire à fente (2, 2A, 3, 3A).

17. Cellule d'électrolyse selon au moins l'une des revendications précédentes 1 à 16, caractérisée en ce que le séparateur (1) et l'électrode capillaire à fente (2, 2A, 3, 3A) sont disposés à la verticale et s'étendent le long du séparateur (1) au-dessus de l'électrode capillaire à fente(2, 2A, 3, 3A) et en ce que le long du séparateur s'étend un dispositif répartiteur (6', 6, 7, 8, 9) pour l'amenée de l'électrolyte ou du perméat en une pellicule de descendage (flot tombant) sur l'électrode capillaire à fente (2, 2A, 3, 3A).

18. Cellule d'électrolyse selon au moins l'une des revendications précédentes 1 à 17, caractérisée en ce qu'il est prévu un espace (14) d'amenée ou d'évacuation des gaz, situé latéralement à l'extérieur et/ou rattaché axialement au-dessus de la zone de transport des gaz (11, 11') de l'électrode capillaire à fente (2A, 3, 3A).

19. Cellule d'électrolyse selon au moins l'une des revendications précédentes 1 à 19, caractérisée en ce que la paire d'électrodes conduit l'électricité en continu.

20. Cellule d'électrolyse selon au moins l'une des précédentes revendications précédentes 1 à 19, caractérisée en ce le séparateur (1) forme un parallélépipède avec les électrodes capillaires à fente (2, 3) rattachées à celui-ci et leur est assemblé en un paquet de cellules, une pluralité de rails (4) conducteurs d'électricité écartés latéralement et verticalement, attenant de l'extérieur aux électrodes capillaires à fente (2 et 3) formant des éléments d'appui et d'écartement vers un boîtier (5) logeant ce paquet de cellules.

21. Cellule d'électrolyse selon la revendication 20, caractérisée en ce qu'une pluralité de paquets de cellules est prévue, lequels sont constitués chaque fois d'une paire d'électrodes capillaires à fente (2, 3) avec un séparateur intercalaire (1) en disposition plane, séparées de préférence par des cloisons conductibles électriquement (15), des parois (19, 20) du boîtier opposées entre elles étant prévues comme éléments conducteurs d'électricité.

22. Cellule d'électrolyse selon au moins l'une des revendications précédentes 1 à 21, caractérisée en ce qu'entre l'anode (2, 2A) et la cathode (3, 3A) est prévu un espace d'électrolyte (21) dont les parois forment des séparateurs (1) perméables à l'électrolyte assemblés sans fente à l'anode (2, 2A) ou à la cathode (3, 3A) conformée en électrode capillaire à fente.

23. Cellule d'électrolyse selon la revendication 22, caractérisée en ce qu'une pluralité de paires d'électrodes en forme de plaque (2, 2A, 3, 3A) est disposée en série et que les espaces d'électrolyte (21) sont raccordés en amont et/ou en aval des paires d'électrodes (2, 2A, 3, 3A) et communiquent entre eux au-dessus et/ou au-dessous de ceux-ci.

24. Cellule d'électrolyse selon la revendication 23, caractérisée en ce qu'une électrode capillaire à fente (2A, 3A) d'une première paire d'électrodes (2, 2A, 3, 3A) forme en même temps une électrode d'une autre paire d'électrodes (2A, 3A) et que cette électrode capillaire à fente (2A, 3A) comprend deux zones (10, 13) hydrophiles de réaction le long de leurs faces extérieures opposées proches du séparateur.

25. Electrode capillaire à fente pour réactions électrolytiques dégageant ou consommant des gaz, en particulier pour l'électrolyse à l'alcali et au chlore ou de l'eau, ou comme pile à combustible pour produire du courant, avec une pluralité d'éléments d'électrode écartés entre lesquels sont formées des fentes capillaires, caractérisée en ce que l'électrode capillaire à fente (2, 2A, 3, 3A) comprend au moins une zone (10, 13) de réaction hydrophile active électrolytiquement pour conduire séparément l'électrolyte ou le perméat et en ce qu'un mouillage de l'électrode capillaire à fente par électrolyte ou perméat a lieu le long de la zone de réaction (10, 13) hydrophile active électrolytiquement de capillaire à fente (2, 2A, 3, 3A).

26. Electrode capillaire à fente selon la revendication 25, caractérisée en ce qu'un séparateur est prévu en combinaison avec la zone hydrophile de réaction (10, 13).

27. Electrode capillaire à fente selon la revendication 25 ou 26, caractérisée en ce que l'épaisseur (d) des éléments d'électrode (23, 23a) mesure environ 0,01 à 0,05 mm.

28. Electrode capillaire à fente selon au moins l'une des revendications précédentes 25 à 27, caractérisée en ce que le diamètre intérieur (W) de la fente capillaire (22) entre des éléments d'électrode au moins sensiblement parallèles (22) mesure environ 0,05 à 0,25 mm.

29. Electrode capillaire à fente selon au moins l'une des revendications précédentes 25 à 28, caractérisée en ce que l'électrode capillaire à fente (2, 2A, 3, 3A) se compose d'éléments d'électrode (23) à faces planes et parallèles disposés de façon alternée et d'éléments d'écart ondulés (23a).

30. Electrode capillaire à fente selon au moins l'une des revendications précédentes 25 à 29, caractérisée en ce les éléments d'électrode comprennent des moulures ou des profilements intégrés pour les écarter réciproquement et former la fente capillaire (22).

31. Electrode capillaire à fente selon au moins l'une des revendications précédentes 25 à 30, caractérisée en ce que la largeur (B) des éléments d'électrode (23, 23a) déterminant l'épaisseur de l'électrode capillaire à fente (2, 2A, 3, 3A) mesure au moins 10 fois le diamètre intérieur (W) de la fente capillaire (22).

32. Electrode capillaire à fente selon au moins l'une des revendications précédentes 25 à 31, caractérisée en ce que la largeur (B) de la zone hydrophile de réaction (10, 13) des éléments d'électrode (23, 23a) mesure au moins un quart de la largeur (B) des éléments d'électrode (23, 23a).

33. Electrode capillaire à fente selon au moins l'une des revendications précédentes 25 à 32, caractérisée en ce que l'électrode capillaire à fente (2A, 2B) comprend, le long de côtés extérieurs opposés, deux zones hydrophiles de réaction (10, 13) séparées par la zone hydrophobe de transport de gaz (11) dans la partie centrale de l'électrode capillaire à fente (2A, 2B).

34. Procédé d'électrolyse pour processus dégageant ou consommant des gaz dans des cellules d'électrolyse avec au moins une paire d'électrodes, dont au moins l'une est capillaire à fente et est séparée de l'autre par au moins un séparateur, avec une cellule d'électrolyse selon la revendication 1, l'électrolyte ou le perméat et le gaz de réaction produit ou à consommer étant conduits séparément, au moins sensiblement à l'intérieur de l'électrode capillaire à fente (2, 2A, 3, 3A) et l'électrclyte n'influençant pas sensiblement le transport de gaz qui n'influence pas non plus l'électrolyte, et l'électrolyte ou le perméat étant conduits le long du séparateur vers l'électrode capillaire à fente ou éloignés de celle-ci.

35. Procédé selon la revendicaticn 34, caractérisé en ce que, dans l'électrode capillaire à fente , se forme une zone hydrophile de réaction (10, 13) tournée vers le séparateur et remplie d'électrolyte ainsi qu'une zone de transport de gaz sensiblement dépourvue d'électrolyte (11, 11') et couvrant la majeure partie de l'électrode capillaire à fente (2, 2A, 3, 3A) et sensiblement dépourvue d'électrolyte (11, 11'), et que le gaz de réaction est conduit dans un sens essentiellement perpendiculaire et/ou parallèle au séparateur (1) à travers les zones hydrophobes et sensiblement dépourvues d'électrolyte de transport de gaz (11, 11') de la fente capillaire (22) de l'électrode capillaire à fente (2, 2A, 3, 3A) vers leur zone de réaction (10, 13) hydrophile remplie d'électrolyte ou en est évacué (en la traversant).

36. Procédé selon la revendication 34 ou 35, caractérisé en ce que l'électrolyte ou le perméat n'est conduit qu'à une zone hydrophile intérieure de réaction (10, 13) appliquée contre le séparateur (1) puis est ensuite réparti par capillarité dans la zone hydrophile de réaction (10, 13) tandis que la zone de transport de gaz (11, 11') hydrophobe détournée du séparateur (1) est maintenue essentiellement sans électrolyte.

37. Procédé selon au moins l'une des revendications précédentes 34 à 36, caractérisé en ce que l'électrolyte ou l'eau de l'électrode capillaire à fente (2, 2A, 3, 3A) est conduite à travers le séparateur (1).

38. Procédé selon au moins l'une des revendications précédentes 34 à 37, caractérisé en ce que l'électrolyte ou le perméat, en particulier de l'eau, est amené le long du séparateur (1), essentiellement à la verticale du sens de transport du gaz de réaction, de préférence sous forme de pellicule de descendage (flot tombant) à la zone de réaction hydrophile (10, 13) absorbant l'électrolyte de l'électrode capillaire à fente.

39. Procédé selon au moins l'une des revendications précédentes 34 à 38, caractérisé en ce que l'électrolyte est transporté dans un compartiment d'électrolyte (21) situé entre l'anode (2, 2A) et la cathode (3, 3A) et est amené à l'électrode capillaire à fente (2, 2A, 3, 3A) prévu comme anode et/ou cathode et pratiqué à travers la paroi du compartiment d'électrolyte (21) comme séparateur imperméable à l'électrolyte.

40. Procédé selon la revendication 39, caractérisé en ce que l'électrolyte est conduit aux électrodes capillaires à fente (2A, 3A) comprenant chacune une zone de réaction hydrophile le long des côtés extérieurs opposés en venant de deux côtés à travers un séparateur (1) chaque fois.

41. Procédé selon au moins l'une des revendications précédentes 34 à 40, caractérisé en ce que l'électrolyte ou le perméat, et en particulier de l'eau, est conduit à l'électrode capillaire à fente (2, 3) sous forme d'une pellicule de descendage (flot tombant) le long d'une surface du séparateur.

42. Procédé selon au moins l'une des revendications précédentes 34 à 41, caractérisé en ce que l'électrolyte ou le perméat est conduit de la surface du séparateur (1) vers le haut près d'une face supérieure de l'électrode capillaire à fente (2, 3).

43. Procédé selon au moins l'une des revendications précédentes 34 à 42, caractérisé en ce que le gaz de réaction est évacué ou amené à travers des zones de l'électrode capillaire (2, 2A, 3, 3A) qui sont dépourvues d'électrolyte.

44. Procédé selon au moins l'une des revendications précédentes 34 à 43, caractérisé en ce que le gaz de réaction est évacué de l'électrode capillaire à fente (2, 3) ou amené à celle-ci par un côté détourné du séparateur.

45. Procédé selon au moins l'une des revendications précédentes 34 à 44, caractérisé en ce que la pellicule de descendage (flot tombant) d'électrolyte ou de perméat amenée de l'électrode capillaire à fente (2, 3) par le haut est répandue et maintenue sous cette forme sur le côté de l'électrode capillaire à fente (2, 2A, 3, 3A) attenant au séparateur (1) et que le gaz de réaction est évacué ou amené essentiellement à la verticale du séparateur (1) à travers la fente capillaire (22) de l'électrode capillaire à fente dépourvue d'électrolyte ou de perméat, et en particulier d'eau.
